# FASCICULE DE BREVET EUROPEEN

(11) **EP 0 906 603 B1**
(45) Date de publication et mention de la délivrance du brevet: **15.09.2004**
(21) Numéro de dépôt: 97925096.6
(22) Date de dépôt: 16.05.1997
(51) Int. Cl.: G07F 7/10, H04Q 7/32

(54) **SYSTEME DE COMMUNICATION PERMETTANT UNE GESTION SECURISEE ET INDEPENDANTE D'UNE PLURALITE D'APPLICATIONS PAR CHAQUE CARTE UTILISATEUR, CARTE UTILISATEUR ET PROCEDE DE GESTION CORRESPONDANTS**
KOMMUNIKATIONSSYSTEM MIT GESICHERTER, UNABHÄNGIGER VERWALTUNG MEHRERER ANWENDUNGEN PRO GEBRAUCHERKARTE, GEBRAUCHERKARTE UND VERWALTUNGSVERFAHREN DAFÜR
COMMUNICATION SYSTEM FOR MANAGING SAFELY AND INDEPENDENTLY A PLURALITY OF APPLICATIONS BY EACH USER CARD AND CORRESPONDING USER CARD AND MANAGEMENT METHOD

(30) Priorité: 17.05.1996 FR 9606382
(43) Date de publication de la demande: 07.04.1999
(73) Titulaire: GEMPLUS, 13881 Gémenos Cédex (FR)
(72) Inventeur: PROUST, Philippe, F-13600 La Ciotat (FR); LAGET, Anne, F-13124 Peypin (FR); HUET, Cédric, F-13600 La Ciotat (FR)
(86) Numéro de dépôt international: PCT/FR1997/000871
(87) Numéro de publication internationale: WO 1997/044762

(56) Documents cités:
- EP-A- 0 644 513
- EP-A- 0 666 550
- WO-A-94/30023
- MAZZIOTTO G: "THE SUBSCRIBER IDENTITY MODULE FOR THE EUROPEAN DIGITAL CELLULAR SYSTEM GSM" PROCEEDINGS OF THE NORDIC SEMINAR ON DIGITAL LAND MOBILE RADIO COMMUNICATIONS (DMR), OSLO, JUNE 26 - 28, 1990, no. SEMINAR 4, 26 juin 1990, GENERAL DIRECTORATE OF POSTS AND TELECOMMUNICATIONS;FINLAND, pages 3.1, 1-09, XP000515543

## Description

Le domaine de l'invention est celui des systèmes de communication avec des équipements terminaux constitués chacun d'un terminal coopérant avec une carte utilisateur à microprocesseur.

L'invention s'applique notamment, mais non exclusivement, dans le cas d'un système de radiocommunication cellulaire avec des stations mobiles constituées chacune d'un terminal coopérant avec une carte utilisateur appelée module d'identification d'abonné (ou module SIM, pour "Subscriber Identity Module" en langue anglaise).

L'invention s'applique également, à nouveau non exclusivement, dans le cas d'un système de communication avec des stations de paiement constituées chacune d'un terminal bancaire coopérant avec une carte de paiement.

Plus précisément, l'invention concerne un système de communication permettant une gestion sécurisée et indépendante d'une pluralité d'applications par chaque carte utilisateur. L'invention concerne également une carte utilisateur et un procédé de gestion correspondants.

Les inconvénients des systèmes de communication connus sont présentés ci-dessous à travers l'exemple d'un système de radiocommunication cellulaire. Il est clair cependant que l'invention n'est pas limitée à ce type de système, mais concerne plus généralement tout système de communication dans lequel une carte utilisateur, destinée à coopérer avec un terminal, supporte plusieurs applications.

Dans le domaine de la radiocommunication cellulaire, on connaît notamment, principalement en Europe, le standard GSM ("Groupe spécial Systèmes Mobiles publics de radiocommunication fonctionnant dans la bande des 900 Mhz").

L'invention s'applique notamment, mais non exclusivement, à un système selon ce standard GSM. Plus généralement, elle peut s'appliquer à tous les systèmes dans lesquels chaque carte utilisateur peut gérer au moins deux applications distinctes.

Dans le cas d'un système de radiocommunication cellulaire, un terminal est un équipement physique utilisé par un usager du réseau pour accéder aux services de télécommunication offerts. Il existe différents types de terminaux, tels que notamment les portatifs, les portables ou encore les mobiles montés sur des véhicules.

Quand un terminal est utilisé par un usager, ce dernier doit connecter au terminal sa carte utilisateur (module SIM), qui se présente généralement sous la forme d'une carte à puce.

La carte utilisateur supporte une application principale téléphonique (par exemple l'application GSM) qui permet son fonctionnement, ainsi que celui du terminal auquel elle est connectée, dans le système de radiocommunication cellulaire. Notamment, la carte utilisateur procure au terminal auquel elle est connectée un identifiant unique d'abonné (ou identifiant IMSI, pour "International Mobile Subscriber Identity" en langue anglaise). Pour cela, la carte utilisateur inclut des moyens d'exécution de commandes (par exemple, un microprocesseur et une mémoire programme) et des moyens de mémorisation de données (par exemple une mémoire de données).

L'identifiant IMSI, ainsi que toutes les informations individuelles concernant l'abonné et destinées à être utilisées par le terminal, sont stockées dans les moyens de mémorisation de données du module SIM. Ceci permet à chaque terminal d'être utilisé avec n'importe quel module SIM

Dans certains systèmes connus, et notamment dans un système GSM, il existe un service de messages courts (ou SMS, pour "Short Message Service" en langue anglaise) permettant l'envoi de messages courts vers les stations mobiles. Ces messages sont émis par un centre de service de messages courts (ou SMS-C, pour "SMS Center" en langue anglaise).

Lorsqu'une station mobile reçoit un message court, elle le stocke dans les moyens de mémorisation de données de son module SIM. L'application principale téléphonique de chaque module SIM permet de traiter chaque message court reçu.

A l'origine, l'unique fonction d'un message court était de fournir une information à l'abonné, généralement via un écran d'affichage du terminal. Les messages courts, dits messages courts normaux, qui remplissent cette unique fonction ne contiennent donc que des données brutes.

Par la suite, on a imaginé un service de messages courts amélioré (ou ESMS, pour "Enhanced SMS" en langue anglaise), dans lequel deux types de messages courts peuvent être envoyés, à savoir les messages courts normaux précités et des messages courts améliorés pouvant contenir des commandes.

Ainsi, dans le document de brevet EP 562 890 par exemple, il est proposé de transmettre à un module SIM, via des messages courts améliorés, des commandes permettant de mettre à jour ou de reconfigurer ce module SIM à distance. En d'autres termes, des commandes encapsulées dans des messages courts améliorés permettent de modifier l'application principale téléphonique du module SIM.

La demande EP-A-0 666 550 décrit un système d'échange de données comportant au moins une unité portable ayant des moyens de communication, des moyens de traitement et des moyens de mémorisation. Ces damiers comprennent un programme d'exécution et une ou plusieurs descriptions d'application qui comportent au moins une politique d'accès, et une méthode d'accès à des données.

La demande FR-A-0 644 513 décrit une carte multi-applicative adaptée à une pluralité de fournisseurs de service dans laquelle l'accès aux applications est géré par un programme maître ayant une seule politique d'accès. En particulier, l'accès est géré par un fichier à mot de passe appartenant à un utilisateur et qui ne peut être modifié par d'autres.

On a également proposé que le module SIM serve de support à d'autres applications que l'application principale téléphonique, telles que notamment des applications de location de voiture, de paiement ou encore de fidélité.

Du fait que les commandes appartenant à ces autres applications sont contenues dans des messages courts améliorés, et donc externes au module SIM, ces autres applications sont dites distantes ou OTA (pour "Over The Air" en langue anglaise). Par opposition, l'application principale téléphonique, dont les commandes sont contenues dans les moyens de mémorisation de données du module SIM, est dite locale. Les commandes sont également dites locales ou distantes, selon que l'application à laquelle elles appartiennent est elle-même locale ou distante.

Le document de brevet PCT/GB/9401295 (WO-A-9430023) décrit par exemple un module SIM supportant les applications distantes suivantes : mise à jour de numéros de téléphones à distance, location (de voiture ou d'hôtel notamment) et paiement. Chaque message comprend une commande suivie de données. A titre d'exemple, les quatre types de commandes distantes suivants (parmi 255 possibles) sont présentés :
- les commandes d'écriture, permettant de stocker dans le module SIM, à partir d'un emplacement mémoire spécifié, des données contenues dans les messages reçus ;
- les commandes de lecture, permettant de lire des données dans le module SIM, à partir d'un emplacement mémoire spécifié, les données lues étant placées dans des messages à destination des appelants extérieurs ;
- les commandes de verrouillage/déverrouillage, permettant d'autoriser ou interdire l'écriture et la lecture d'emplacements mémoires spécifiés du module SIM ;
- les commandes d'exécution de programme, permettant d'exécuter un programme stocké dans le module SIM.

Avec ces commandes distantes, on peut donc exécuter des applications distantes (location, paiement, reconfiguration de l'application principale téléphonique, ...). On peut également ajouter de nouvelles fonctionnalités au module SIM. Ainsi, le module SIM peut devenir une carte multiservice, avec par exemple les fonctionnalités d'une carte de crédit, d'un passeport, d'un permis de conduire, d'une carte de membre, etc.

Il est clair que ce récent concept de multi-application du module SIM est très avantageux pour l'abonné. En effet, ce dernier peut maintenant effectuer de façon très simple, uniquement avec un terminal dans lequel est inséré son module SIM, de nombreuses opérations telles que par exemple la location d'une voiture ou le paiement d'un service.

En revanche, ce récent concept de multi-application du module SIM, tel qu'il est mis en oeuvre actuellement, présente l'inconvénient majeur de ne pas assurer la gestion indépendante de chacune des applications, locale ou distante. En effet, dans tous les systèmes connus à ce jour, les fichiers des moyens de mémorisation de données du module SIM sont accessibles de la même façon par toutes les applications.

Ainsi, dans le document de brevet PCT/GB/9401295 WO-A-9430023 précité, l'accès à certains emplacements mémoires par une commande est toujours autorisé, tandis que l'accès à d'autres emplacements mémoires par une commande peut être soit autorisé soit refusé. Mais, quel que soit l'emplacement mémoire concerné, l'accessibilité par une commande ne dépend en aucune façon de l'application à laquelle appartient cette commande.

De même, dans les spécifications GSM actuelles (et notamment la spécification GSM 11.11), aucune différence n'est faite entre les applications pour ce qui est des conditions d'accès aux fichiers des moyens de mémorisation de données du module SIM. En effet, chaque fichier possède sa propre politique de contrôle d'accès standard, qui est unique et définie par un jeu de conditions d'accès standard, chacune de ces conditions d'accès standard s'appliquant à une commande distincte pour ce fichier. Chaque condition d'accès standard peut prendre différentes valeurs, telles que par exemple "ALWAYS" (accès toujours autorisé), "CHV1" ou "CHV2" (accès autorisé après vérification du possesseur du module SIM) et "NEVER" (accès jamais autorisé). Mais aucune de ces valeurs ne vise à lier l'accès au fichier à l'identité de l'application à laquelle appartient la commande qui demande cet accès.

Cette absence de contrôle de l'accès aux fichiers en fonction des applications n'est pas satisfaisante du point de vue sécurité. En effet, ceci signifie que toutes les applications distantes supportées par les moyens de mémorisation de données d'un même module SIM peuvent accéder à l'ensemble des fichiers de ces moyens de mémorisation de données. Rien n'empêche donc les données concernant une de ces applications distantes d'être lues ou même modifiées par une autre de ces applications distantes. Il ressort clairement de ce qui précède que chaque application distante ne dispose pas pour ses données propres stockées dans le module SIM d'une sécurité et d'une confidentialité suffisantes.

L'invention a notamment pour objectif de pallier cet inconvénient majeur de l'état de la technique.

Plus précisément, l'un des objectifs de la présente invention est de fournir un système de communication (et notamment, mais non exclusivement, un système de radiocommunication cellulaire) dans lequel chaque carte utilisateur peut gérer de façon sécurisée et indépendante une pluralité d'applications.

En d'autres termes, l'un des objectifs de l'invention est de permettre à chaque fournisseur d'application d'éviter que d'autres applications que la sienne puissent accéder à au moins certains des objets (par exemple des fichiers) de la carte utilisateur qui supportent son application.

Un autre objectif de l'invention est de permettre la mise à jour (ou la reconfiguration) des objets de la carte utilisateur qui supportent les différentes applications, tout en s'assurant que ces applications continuent à être gérées de façon sécurisée et indépendante.

Un objectif complémentaire de l'invention est de permettre la création à distance d'une nouvelle application qui, comme les applications déjà existantes, est supportée par des objets dont au moins certains auxquels elle est seule à pouvoir accéder.

Ces différents objectifs, ainsi que d'autres qui apparaîtront par la suite, sont atteints selon l'invention à l'aide d'un système de communication, du type comprenant au moins un terminal coopérant avec une carte utilisateur à microprocesseur,
chaque carte utilisateur incluant des moyens de mémorisation de données comprenant une pluralité d'objets, lesdits moyens de mémorisation de données servant de support à au moins deux applications distinctes, ladite carte utilisateur comprenant des moyens d'exécution de commandes appartenant auxdites applications,
chaque objet compris dans les moyens de mémorisation de données d'une carte utilisateur étant associé à une première politique de contrôle d'accès définie par un jeu de premières conditions d'accès, chacune desdites premières conditions d'accès s'appliquant, pour ledit objet, à un groupe d'au moins une commande appartenant à la ou aux applications utilisant ladite première politique de contrôle d'accès,
caractérisé en ce que chaque objet est également associé à au moins une autre politique de contrôle d'accès, chaque autre politique de contrôle d'accès étant définie par un jeu d'au moins une condition d'accès alternative, chaque condition d'accès alternative d'une autre politique de contrôle d'accès donnée s'appliquant, pour ledit objet, à un groupe d'au moins une commande appartenant à la ou aux applications utilisant ladite autre politique de contrôle d'accès donnée,
et en ce que chaque objet est également associé à une pluralité d'indicateurs de politique de contrôle d'accès, chaque indicateur de politique de contrôle d'accès indiquant, pour une desdites applications, quelle politique de contrôle d'accès, à savoir première ou autre, utiliser avec cette application, lesdits indicateurs de politique de contrôle d'accès étant stockés dans lesdits moyens de mémorisation de données.

Le principe général de l'invention consiste donc à :
- associer à chaque objet (qui est par exemple un fichier), en plus de la première politique de contrôle d'accès (dite dans certains cas "standard"), une ou plusieurs autres politiques de contrôle d'accès ; et
- indiquer, pour chaque objet, la politique de contrôle d'accès (première ou autre) à utiliser avec chaque application.

Ainsi, l'accès à l'objet (par une commande) peut ne pas être identique pour toutes les applications. Chaque application voit l'accès de ses différentes commandes à un objet définit par celles des politiques de contrôle d'accès qui lui est associée pour cet objet.

Avantageusement, pour chaque objet, au moins une autre politique de contrôle d'accès est spécifique à une des applications, chaque condition d'accès alternative de cette autre politique de contrôle d'accès spécifique s'appliquant, pour ledit objet, à un groupe d'au moins une commande appartenant à l'unique application utilisant cette autre politique de contrôle d'accès spécifique.

De façon avantageuse, pour chaque objet, au moins une autre politique de contrôle d'accès est entièrement commune à au moins deux applications, chaque condition d'accès alternative de cette autre politique de contrôle d'accès entièrement commune s'appliquant, pour ledit objet, à un groupe d'au moins une commande appartenant auxdites au moins deux applications utilisant cette autre politique de contrôle d'accès entièrement commune.

Avantageusement, pour chaque objet, au moins une autre politique de contrôle d'accès est partiellement commune à au moins deux applications,
certaines des conditions d'accès alternatives de cette autre politique de contrôle d'accès partiellement commune s'appliquant, pour ledit objet, à un groupe d'au moins une commande appartenant auxdites au moins deux applications utilisant cette autre politique de contrôle d'accès commune,
d'autres des conditions d'accès alternatives de cette autre politique de contrôle d'accès partiellement commune s'appliquant, pour ledit objet, à un groupe d'au moins une commande appartenant uniquement à l'une desdites au moins deux applications utilisant cette autre politique de contrôle d'accès commune.

Ainsi, pour chaque objet, chaque application peut :
- soit avoir son propre jeu de conditions d'accès alternatives ;
- soit partager tout son jeu de conditions d'accès alternatives avec une ou plusieurs autres applications ;
- soit partager une partie seulement de son jeu de conditions d'accès alternatives avec une ou plusieurs autres applications.

Dans le cas le plus simple, chaque objet est associé d'une part à la première politique de contrôle d'accès et d'autre part à une unique autre politique de contrôle d'accès. Cette dernière est définie par une seule condition d'accès, s'appliquant de façon commune à toutes les commandes des applications qui l'utilisent.

Dans le cas le plus complexe, chaque objet est associé d'une part à la première politique de contrôle d'accès et d'autre part à autant d'autres politiques de contrôle d'accès distinctes qu'il existe d'applications. Chacune de ces autres politiques de contrôle d'accès est définie par une pluralité de conditions d'accès distinctes s'appliquant chacune à une seule ou plusieurs des commandes appartenant à cette autre politique de contrôle d'accès.

Dans un mode de réalisation particulier du système de l'invention, du type permettant une radiocommunication cellulaire, ladite pluralité d'équipements terminaux est une pluralité de stations mobiles, lesdites cartes utilisateur étant des modules d'identification d'abonné.

Dans ce cas particulier d'un système de radiocommunication cellulaire, la pluralité d'applications supportées par les moyens de mémorisation de la carte utilisateur comprend par exemple l'application principale téléphonique (par exemple l'application GSM) et :
- soit au moins une application distante (par exemple de location de voiture, de paiement ou encore de fidélité), dont les commandes sont fournies à partir de l'extérieur aux moyens d'exécution de commande de la carte utilisateur (par exemple via des messages courts améliorés) ; et
- soit au moins une autre application locale, dont les commandes sont fournies en interne aux moyens d'exécution de commande de la carte utilisateur (par exemple à partir d'une mémoire programme ROM de cette carte utilisateur).

Il est à noter que la première situation est plus fréquente que la seconde, du fait qu'une carte utilisateur ne supporte généralement qu'une application locale, à savoir l'application principale téléphonique. Cependant, la seconde situation peut également être envisagée.

Ainsi, selon l'invention, dans le cas particulier d'un système de radiocommunication cellulaire, chaque carte utilisateur peut gérer de façon sécurisée et indépendante toutes ou certaines des applications qu'il supporte.

Dans un mode de réalisation avantageux de l'invention, ledit système étant du type comprenant en outre au moins un centre de service de messages,
lesdits moyens de mémorisation de données d'une carte utilisateur servant de support à au moins une application locale et au moins une application distante de ladite carte utilisateur, les commandes étant dites locales, lorsqu'elles appartiennent à ladite application locale, ou distantes, lorsqu'elles appartiennent à ladite application distante,
chaque terminal pouvant recevoir des messages, de type normal ou amélioré, émis par ledit centre de service de messages, chaque carte utilisateur comprenant des moyens de stockage et de traitement des messages reçus par le terminal avec lequel elle coopère,
les messages normaux contenant des données brutes constituant une information destinée à être fournie à l'abonné via notamment un écran d'affichage du terminal, les messages améliorés contenant des commandes distantes,
ledit système est caractérisé en ce que lesdits moyens de mémorisation de données de chaque carte utilisateur stockent également une liste d'applications distantes autorisées,
et en ce que chaque carte utilisateur comprend également des moyens de discrimination des messages améliorés, permettant de bloquer chaque message amélioré qui contient des commandes distantes n'appartenant pas à une desdites applications distantes autorisées.

Ainsi, la carte utilisateur détecte si l'application distante émettrice du message amélioré est autorisée à accéder à cette carte utilisateur. Cette opération de discrimination constitue un niveau de sécurité supplémentaire pour l'accès des commandes à la mémoire de données de la carte utilisateur.

Les messages normaux ou améliorés sont par exemple des messages courts, selon le vocabulaire GSM.

De façon préférentielle, lesdits moyens de mémorisation de données de chaque carte utilisateur stockent également, pour chacune desdites applications distantes autorisées, une référence secrète et un mode d'authentification de message associés,
et chaque carte utilisateur comprend également des moyens d'authentification des messages améliorés discriminés, permettant d'authentifier un message amélioré discriminé en utilisant la référence secrète et le mode d'authentification de message associés, dans lesdits moyens de mémorisation de données, à l'application distante autorisée à laquelle appartiennent les commandes contenues dans ledit message amélioré discriminé.

En d'autres termes, la carte utilisateur authentifie chaque message amélioré discriminé selon le mode d'authentification et la référence secrète associés à l'application émettrice de ce message. Cette opération d'authentification constitue encore un autre niveau de sécurité supplémentaire pour l'accès des commandes à la mémoire de données de la carte utilisateur.

Avantageusement, pour chaque objet, la ou au moins une des autres politiques de contrôle d'accès, dite seconde politique de contrôle d'accès, est définie par un jeu d'au moins une condition d'accès alternative particulière, chaque condition d'accès alternative particulière pouvant prendre notamment les valeurs suivantes :
- "aucun accès" : si ledit objet n'est accessible par aucune commande dudit groupe d'au moins une commande auquel s'applique ladite condition d'accès alternative particulière ;
- "accès privé" : si ledit objet n'est accessible que par les commandes appartenant à une unique application prédéterminée, parmi ledit groupe d'au moins une commande auquel s'applique ladite condition d'accès alternative particulière ;
- "accès partagé" : si ledit objet est accessible par les commandes appartenant à au moins deux applications prédéterminées, parmi ledit groupe d'au moins une commande auquel s'applique ladite condition d'accès alternative particulière.

Dans un mode de réalisation particulier de l'invention, pour chaque objet, au moins une autre politique de contrôle d'accès, dite politique de contrôle d'accès à distance, est définie par un jeu d'au moins une condition d'accès à distance, chaque condition d'accès à distance s'appliquant, pour ledit objet, à un groupe d'au moins une commande distante appartenant à la ou aux applications distantes utilisant ladite politique de contrôle d'accès à distance,
et pour chaque objet, seuls les indicateurs de politique de contrôle d'accès associés chacun à une des applications distantes peuvent indiquer ladite politique de contrôle d'accès à distance.

Dans ce mode de réalisation particulier, chaque objet peut voir son accès autorisé ou interdit à chaque application distante, à condition bien sûr que la politique de contrôle d'accès à distance soit celle devant effectivement être utilisée avec cette application distante.

Pour chaque objet, on peut prévoir :
- soit une politique de contrôle d'accès à distance distincte pour chaque application distante ;
- soit une même politique de contrôle d'accès à distance pour au moins certaines des applications distantes (ou bien pour toutes).

Il est à noter que si, mise à part la première politique de contrôle d'accès, l'unique ou toutes les autres politiques de contrôle d'accès sont des politiques de contrôle d'accès à distance, alors la première politique de contrôle d'accès doit obligatoirement être utilisée avec la ou les applications locales.

De façon avantageuse, pour chaque objet, chaque condition d'accès à distance peut prendre les mêmes valeurs que lesdites conditions d'accès alternatives particulières.

Ainsi, il est possible de réaliser une partition de la mémoire de données de la carte utilisateur entre les différentes applications distantes. En effet, certains objets peuvent être rendus accessibles :
- soit ("aucun accès") par aucune commande distante, quelle que soit l'application distante à laquelle cette commande distante appartient ;
- soit ("accès privé") seulement par toutes ou certaines des commandes appartenant à une unique application distante, dite parente de cet objet ;
- soit ("accès partagé") par toutes ou certaines des commandes appartenant à certaines applications distantes bien déterminées.

De cette façon, tous les objets à accès privé liés à une même application distante parente constituent une zone sécurisée et étanche, propre à cette application parente et inaccessible aux autres applications. Le fournisseur d'une application distante donnée est ainsi assuré que d'autres applications distantes que la sienne ne peuvent pas accéder à la zone sécurisée qui lui est allouée.

Dans un mode de réalisation avantageux de l'invention, dans lequel lesdits moyens de mémorisation de données de chaque carte utilisateur sont du type possédant une structure hiérarchique à au moins trois niveaux et comprenant au moins les trois types de fichiers suivants :
- fichier maître, ou répertoire principal ;
- fichier spécialisé, ou répertoire secondaire placé sous ledit fichier maître ;
- fichier élémentaire, placé sous un desdits fichiers spécialisés, dit fichier spécialisé parent, ou directement sous ledit fichier maître, dit fichier maître parent.
ledit système est caractérisé en ce que lesdits moyens de mémorisation de données de chaque carte utilisateur comprennent au moins un fichier élémentaire système, chaque fichier élémentaire système étant lié à une application distante autorisée et stockant une première information de localisation de la référence secrète et du mode d'authentification de message associés à cette application distante autorisée à laquelle il est lié,
et en ce que chaque message amélioré comprend une seconde information de localisation du fichier élémentaire système auquel est liée l'application distante autorisée à laquelle appartiennent les commandes contenues dans ledit message amélioré,
lesdits moyens d'authentification lisant dans chaque message amélioré discriminé ladite seconde information de localisation du fichier élémentaire système, de façon à lire dans le fichier élémentaire système ladite première information de localisation de la référence secrète et du mode d'authentification de message à utiliser pour authentifier ledit message amélioré discriminé.

Ainsi, chaque fichier élémentaire système contient des informations permettant de retrouver les éléments nécessaire à l'opération d'authentification d'un message émis par l'application distante à laquelle est lié ce fichier élémentaire système. De son côté, chaque message comporte (dans son en-tête) des informations permettant de retouver le fichier élémentaire système auquel son application émettrice est liée, de façon que son authentification puisse être effectuée.

Avantageusement, chaque fichier élémentaire système est placé sous un fichier spécialisé ou directement sous le fichier maître, un fichier élémentaire système au maximum pouvant être placé sous chaque fichier spécialisé, et un fichier élémentaire système au maximum pouvant être placé directement sous le fichier maître.

De façon préférentielle, si aucun fichier élémentaire système n'existe sous un fichier spécialisé, ni sous le fichier maître, alors chaque fichier élémentaire placé sous ledit fichier spécialisé, quelle que soit la valeur des conditions d'accès à distance associées à ce fichier élémentaire, n'est accessible par aucune commande distante,
et si aucun fichier élémentaire système n'existe directement sous le fichier maître, alors chaque fichier élémentaire placé directement sous le fichier maître, quelle que soit la valeur des conditions d'accès à distance associées à ce fichier élémentaire, n'est accessible par aucune commande distante.

Ceci signifie que pour être accessible par une commande distante, un fichier doit être placé sous un fichier spécialisé ou directement sous un fichier maître auquel se rapporte un fichier élémentaire système. Ce qu'on entend ici par "se rapporte" est précisé par la suite.

Préférentiellement, ladite seconde information de localisation du fichier élémentaire système est un identificateur d'un fichier spécialisé ou d'un fichier maître auquel se rapporte ledit fichier élémentaire système selon une stratégie de recherche prédéterminée dans les moyens de mémorisation de données.

Avantageusement, ladite stratégie de recherche prédéterminée dans les moyens de mémorisation de données est un mécanisme de recherche en amont (du type "backtracking"), consistant à rechercher si un fichier élémentaire système existe sous le fichier spécialisé ou le fichier maître indiqué par ledit identificateur, et, dans la négative et si l'identificateur n'indique pas le fichier maître, à rechercher si un fichier élémentaire système existe directement sous le fichier maître.

Ainsi, l'expression "se rapporte" utilisée précédemment correspond par exemple à une recherche de type "backtracking".

Dans un mode de réalisation avantageux de l'invention, dans le cas d'un fichier dont une des conditions d'accès à distance possède la valeur "accès privé", ladite unique application distante prédéterminée dont les commandes distantes peuvent accéder audit fichier est, sous réserve que son authentification soit réussie, l'application distante autorisée parente dudit fichier, c'est-à-dire l'application distante autorisée liée au même fichier élémentaire système que celui auquel se rapporte le fichier spécialisé parent ou le fichier maître parent dudit fichier,
et, dans le cas d'un fichier dont la condition d'accès à distance possède la valeur "accès partagé", lesdites au moins deux applications distantes prédéterminées dont les commandes distantes peuvent accéder audit fichier sont, sous réserve que leur authentification soit réussie, toutes les applications distantes autorisées, quel que soit le fichier élémentaire système auquel chacune d'elles est liée.

Ainsi, une application parente liée à un fichier élémentaire système donné a comme fichiers enfants tous les fichiers dont le fichier spécialisé parent ou le fichier maître parent (c'est-à-dire le fichier spécialisé ou le fichier maître sous lequel ils sont directement placés) se rapporte à ce fichier élémentaire système donné.

L'ensemble des fichiers enfants d'une application parente constitue un regroupement logique de fichiers, également appelé domaine de sécurité propre à cette application. Dans le cas d'un accès distant autorisé du type "privé", c'est ce domaine de sécurité qui délimite la zone sécurisée spécifique à l'application bénéficiant de ce droit privatif.

En d'autres termes, le domaine de sécurité consiste pour partie à regrouper logiquement les fichiers en fonction de leur lien de dépendance parent/enfant avec une application. Chaque application possède son domaine de sécurité. Cela consiste en fait à donner une définition des objets du domaine de sécurité de l'application. Le regroupement logique des fichiers peut donc être appelé domaine de sécurité de l'application, ou encore domaine de validité du schéma sécuritaire de l'application.

De façon avantageuse, chaque fichier élémentaire système comprend un ensemble distinct d'indicateurs de politique de contrôle d'accès, chaque indicateur de politique de contrôle d'accès indiquant, pour une desdites applications, quelle politique de contrôle d'accès, à savoir première ou autre, utiliser avec cette application,
ledit ensemble distinct d'indicateurs de politique de contrôle d'accès étant associé à tous les fichiers dont le fichier spécialisé parent ou le fichier maître parent se rapporte audit fichier élémentaire système.

L'invention concerne également une carte utilisateur à microprocesseur du type destiné à coopérer avec un terminal de façon à constituer un équipement terminal d'un système de communication tel que précité, ladite carte incluant des moyens (8) de mémorisation de données comprenant une pluralité d'objets (MF, DF, EF), lesdits moyens (8) de mémorisation de données servant de support à au moins deux applications distinctes , ladite carte utilisateur comprenant des moyens (6, 7) d'exécution de commandes appartenant auxdites applications,
chaque objet compris dans les moyens de mémorisation de données d'une carte utilisateur étant associé à une première politique de contrôle d'accès définie par un jeu de premières conditions d'accès , chacune desdites premières conditions d'accès s'appliquant, pour ledit objet, à un groupe d'au moins une commande appartenant à la ou aux applications utilisant ladite première politique de contrôle d'accès, et caractérisée en ce que chaque objet des moyens de mémorisation de données de ladite carte utilisateur est également associé à au moins une autre politique de contrôle d'accès, chaque autre politique de contrôle d'accès étant définie par un jeu d'au moins une condition d'accès alternative, chaque condition d'accès alternative d'une autre politique de contrôle d'accès donnée s'appliquant, pour ledit objet, à un groupe d'au moins une commande appartenant à la ou aux applications utilisant ladite autre politique de contrôle d'accès donnée,
et en ce que chaque objet est également associé à une pluralité d'indicateurs de politique de contrôle d'accès, chaque indicateur de politique de contrôle d'accès indiquant, pour une desdites applications, quelle politique de contrôle d'accès, à savoir première ou autre, utiliser avec cette application, lesdits indicateurs de politique de contrôle d'accès étant stockés dans les moyens de mémorisation de données de ladite carte utilisateur.

L'invention concerne aussi un procédé de gestion sécurisée et indépendante d'au moins deux applications distantes, par une carte utilisateur à microprocesseur du type destiné à coopérer avec un terminal de façon à constituer un équipement terminal d'un système de communication tel que précité,
caractérisé en ce que, pour chaque message amélioré reçu, ladite carte utilisateur effectue notamment l'étape suivante : pour chaque commande distante contenue dans ledit message amélioré, vérification de l'accessibilité de cette commande distante à l'objet concerné, ladite vérification de l'accessibilté s'appuyant sur une politique de contrôle d'accès, première ou à distance, à utiliser pour ledit objet concerné avec ladite application distante courante.

Avantageusement, pour chaque message amélioré reçu, ladite carte utilisateur effectue également une étape préalable de discrimination dudit message amélioré, de façon à ne poursuivre son traitement que si l'application distante, dite application distante courante, à laquelle appartiennent les commandes distantes qu'il contient est une application distante autorisée.

De façon avantageuse, pour chaque message amélioré reçu, ladite carte utilisateur effectue également une étape préalable d'authentification dudit message amélioré, en utilisant une référence secrète et un mode d'authentification de message associés à ladite application distante courante.

Avantageusement, au moins certains des éléments appartenant au groupe suivant peuvent être créés et/ou mis à jour et/ou supprimés par l'intermédiaire de commandes distantes :
- les valeurs des conditions d'accès, notamment premières ou à distance, des politiques de contrôle d'accès associées à chaque objet ;
- l'indicateur de politique de contrôle d'accès, notamment première ou à distance, à utiliser avec chaque application pour chaque objet ;
- la liste des applications distantes autorisées ;
- pour chacune des applications distantes autorisées de ladite liste, la référence secrète et le mode d'authentification de message associés ;
- le ou lesdits fichiers élémentaires système liés chacun à une application distante autorisée distincte ;
- les fichiers élémentaires, spécialisé et maître.

Ainsi, la sécurisation d'accès aux objets selon l'invention peut être adaptée, par mise à jour ou reconfiguration, à l'évolution des besoins de chaque application.

De plus, des applications (par exemple distantes) entièrement nouvelles peuvent être ajoutées et supportées par la mémoire de données de la carte mémoire. Ces nouvelles applications (distantes) peuvent bénéficier, de la même façon que les applications (distantes) prévues à l'origine, d'une sécurité d'accès propre (avec par exemple un mode d'authentification, une référence secrète et un schéma sécuritaire spécifiques).

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma synoptique simplifié d'un mode de réalisation particulier d'un système de radiocommunication cellulaire selon l'invention ;
- la figure 2 présente la structure d'un mode de réalisation particulier d'un message court amélioré selon l'invention reçu par le module SIM de la figure 1 ;
- la figure 3A présente de façon schématique un mode de réalisation particulier d'un fichier de la mémoire de données de la figure 1, avec ses politiques de contrôle d'accès et ses indicateurs associés ;
- la figure 3B présente un exemple d'une pluralité d'indicateurs tels qu'associés à un fichier comme présenté sur la figuré 3A ;
- la figure 4 présente un premier exemple de partition de la mémoire de données de la figure 1 entre plusieurs applications ;
- la figure 5 présente un organigramme simplifié d'un mode de réalisation particulier du traitement par le module SIM de la figure 1 d'un message court amélioré ;
- les figures 6 et 7 permettent d'expliciter les étapes de filtrage d'application et d'authentification de message apparaissant sur la figure 5 ;
- les figures 8 et 9 permettent d'expliciter l'étape de sécurisation de l'exécution d'une commande apparaissant sur la figure 5 ;
- la figure 10 présente un second exemple de partition de la mémoire de données de la figure 1 entre plusieurs applications.

Dans le mode de réalisation particulier décrit ci-dessous, uniquement à titre d'exemple, le système de communication est un système de radiocommunication cellulaire du type GSM. Il est clair toutefois que l'invention n'est pas limitée à ce type particulier de système de communication, mais concerne plus généralement tous les systèmes de communication comprenant une pluralité d'équipements terminaux constitués chacun d'un terminal coopérant avec une carte utilisateur à microprocesseur.

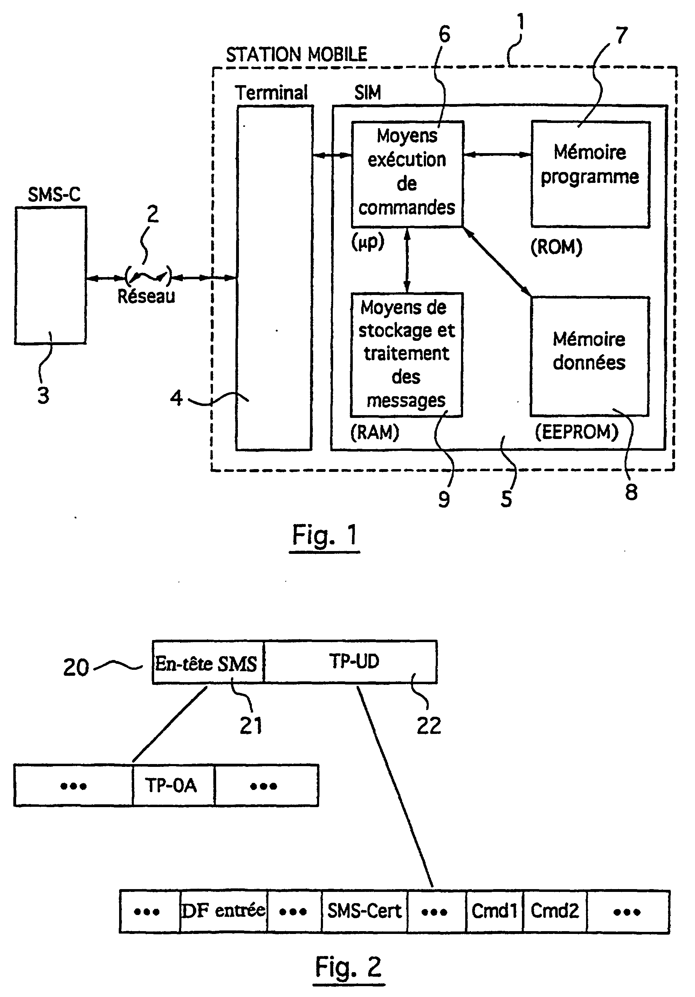

Dans un souci de simplification, sur la figure 1, on a représenté uniquement une station mobile (MS) 1 reliée, via un réseau 2, à un centre de service de messages courts (SMS-C)3. En réalité, le système comprend une pluralité de stations mobiles 1, constituées chacune d'un terminal (ME) 4 coopérant avec un module d'identification d'abonné (module SIM) 5.

Chaque module SIM 5 comprend notamment, de façon classique :
- des moyens 6 d'exécution de commandes, constitués généralement d'un microprocesseur ;
- une mémoire programme 7, stockant l'application GSM (ou plus généralement l'application principale téléphonique) et éventuellement d'autres applications locales. Cette mémoire programme 7 est par exemple une mémoire ROM ;
- une mémoire de données 8, servant de support à toutes les applications, locales ou distantes, que le module SIM peut exécuter. En d'autres termes, elle stocke toutes les données auxquelles les applications supportées doivent pouvoir accéder lors de leur exécution. Par exemple, elle stocke toutes les informations individuelles de l'abonné (telles que notamment son numéro international d'abonné (identifiant IMSI), sa clé d'authentification individuelle (Ki) et l'algorithme d'authentification (A3)) nécessaires à l'exécution de l'application GSM. Cette mémoire de données 8 est par exemple une mémoire EEPROM ;
- des moyens 9 de stockage et traitement des messages courts reçus. En effet, chaque message court reçu par le terminal 4 est transmis au module SIM 5 pour traitement par l'application GSM.

Le SMS-C 3 met en oeuvre un service de messages courts amélioré (ESMS) qui permet d'envoyer deux types de messages courts à l'ensemble des stations mobiles 1, à savoir :
- des messages courts "normaux", qui transportent uniquement des données brutes. Les données brutes d'un message court normal correspondent à une information à afficher sur un écran du terminal 4, par exemple pour inviter l'abonné à rappeler un numéro donné ;
- des messages courts "améliorés", qui transportent des commandes appartenant à des applications dites distantes (ou OTA), du fait que les commandes (également dites distantes) qui les constituent ne sont pas stockées dans la mémoire programme 7 du module SIM.

La figure 2 présente la structure d'un mode de réalisation particulier d'un message court amélioré selon l'invention reçu par le module SIM 5. Ce message court amélioré 20 comprend un en-tête SMS 21 (SMS Header en langue anglaise) et un corps 22 (TP-UD, pour "Transfer layer Protocol - User Data" en langue anglaise). Les commandes distantes Cmd1, Cmd2, etc sont placées dans le corps 22. Il s'agit par exemple de commandes classiques (opérationnelles ou administratives), définies dans les normes GSM 11.11, ISO 78.16-4 ou encore EN 726-3, telles que SELECT, UPDATE BINARY, UPDATE RECORD, SEEK, CREATE FILE, CREATE RECORD, EXTEND, etc. Les autres champs concernés par la présente invention sont présentés en détail dans la suite de la description.

La mémoire de données 8 comprend une pluralité de fichiers. De façon classique, et comme spécifié dans la norme GSM 11.11, chacun de ces fichiers est associé à une politique de contrôle d'accès standard. Celle-ci est définie par une pluralité de conditions d'accès standard (Standard AC) s'appliquant chacune à une commande distincte susceptible d'accéder à ce fichier. Chaque condition d'accès standard peut prendre différentes valeurs (par exemple "ALWays", "CHV1". "CHV2" ou encore "NEVer"). Aucune de ces valeurs n'est fonction de l'application à laquelle appartient la commande qui désire accéder au fichier.

Le principe général de l'invention consiste à associer également à chaque fichier de la mémoire de données 8 :
- au moins une autre politique de contrôle d'accès, chaque autre politique de contrôle d'accès étant définie par un jeu d'au moins une condition d'accès alternative, chaque condition d'accès alternative d'une autre politique de contrôle d'accès donnée s'appliquant, pour ce fichier, à un groupe d'au moins une commande appartenant à la ou aux applications utilisant cette autre politique de contrôle d'accès ; et
- pour chacune des applications supportées, un indicateur de politique de contrôle d'accès, indiquant quelle politique de contrôle d'accès, à savoir standard ou autre, utiliser avec cette application.

Dans un souci de simplification, dans l'exemple présenté dans la suite de la description, les applications ne possèdent pas chacune, pour chaque fichier, une autre politique de contrôle d'accès qui leur est propre (avec leur propre jeu de conditions d'accès alternatives) mais se partagent toutes, et de façon complète (c'est-à-dire pour toutes leurs commandes sans distinction), deux autres politiques de contrôles d'accès communes (avec chacune une unique condition d'accès qui s'applique pour toutes les commandes).

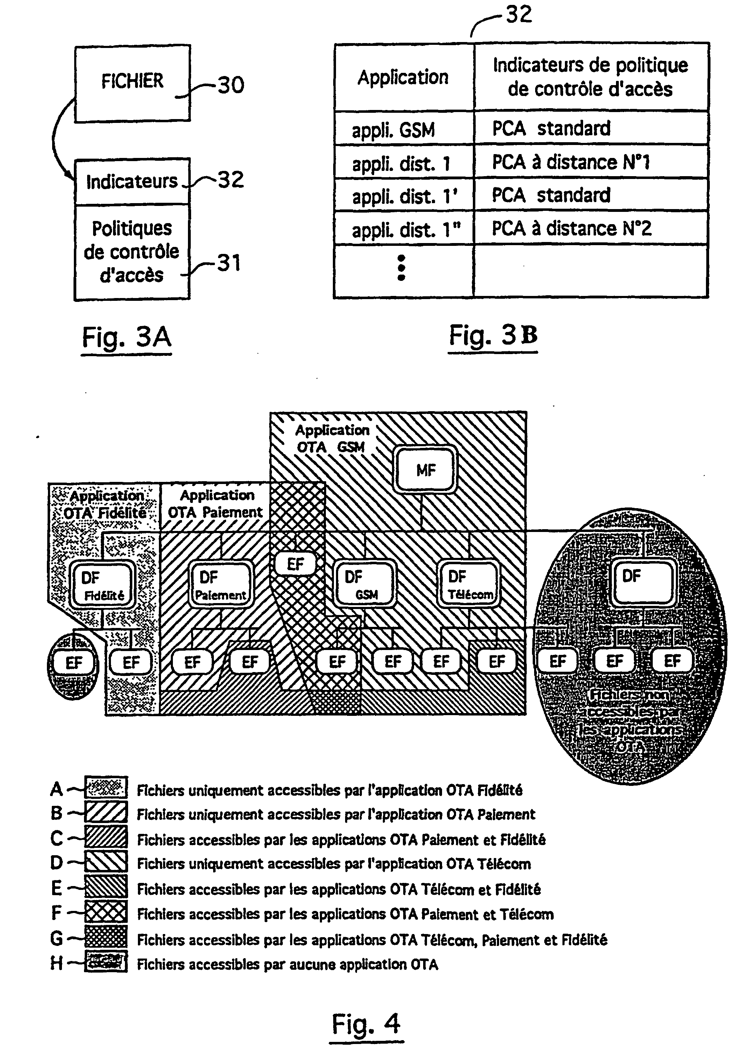

La figure 3A présente de façon schématique un mode de réalisation particulier d'un fichier 30 de la mémoire de données 8, avec ses politiques de contrôle d'accès 31 et ses indicateurs associés 32. Le tableau de l'annexe 1 présente un exemple d'une pluralité de politiques de contrôle d'accès telles qu'associées à ce fichier 30. La figure 3B présente un exemple d'une pluralité d'indicateurs 32 tels qu'associés au fichier 30.

Dans l'exemple suivant de caractéristiques associées à un fichier 30, décrit en relation avec la figure 3B et le tableau de l'annexe 1, on considère que :
- le module SIM supporte l'application GSM (unique application locale) et trois applications distantes (appli. dist. 1, appli. dist. 1'et appli. dist. 1") ;
- il existe une politique de contrôle d'accès standard (PCA standard) et deux politiques de contrôle d'accès à distance (PCA à distance n°1 et PCA à distance n°2).

Comme présenté sur le tableau de l'annexe 1, dans la politique de contrôle d'accès standard, chaque commande (distante ou locale), quelle que soit l'application à laquelle elle appartient (application GSM ou l'une des applications distantes), est associée à une condition d'accès standard spécifique (cond. d'accès std 1, cond. d'accès std 2, ...). De façon classique, chaque condition d'accès standard possède une valeur appartenant au groupe comprenant : "ALWAYS" (accès toujours autorisé), "CHV1" ou "CHV2" (accès autorisé après vérification du possesseur du module SIM) et "NEVER" (accès jamais autorisé).

Dans la politique de contrôle d'accès à distance n°1, toutes les commandes distantes (dans un souci de simplification), quelle que soit l'application à laquelle elles appartiennent, sont associées à une même condition d'accès à distance (également dans un souci de simplification) (cond. d'accès à dist. 1). Cette condition d'accès à distance peut par exemple prendre l'une des trois valeurs suivantes : "PARTAGE", "PRIVE" et "JAMAIS". Ainsi, dans cet exemple, elle possède la valeur "PARTAGE".

On explique maintenant le sens de chacune de ces trois valeurs :
- "JAMAIS" (ou "aucun accès") signifie que le fichier 30 n'est accessible par aucune commande, quelle que soit l'application à laquelle appartient cette commande ;
- "PRIVE" (ou "accès privé") signifie que le fichier 30 n'est accessible que par les commandes appartenant à une unique application prédéterminée ;
- "PARTAGE" (ou "accès partagé") signifie que le fichier 30 est accessible par les commandes appartenant à au moins deux applications prédéterminées.

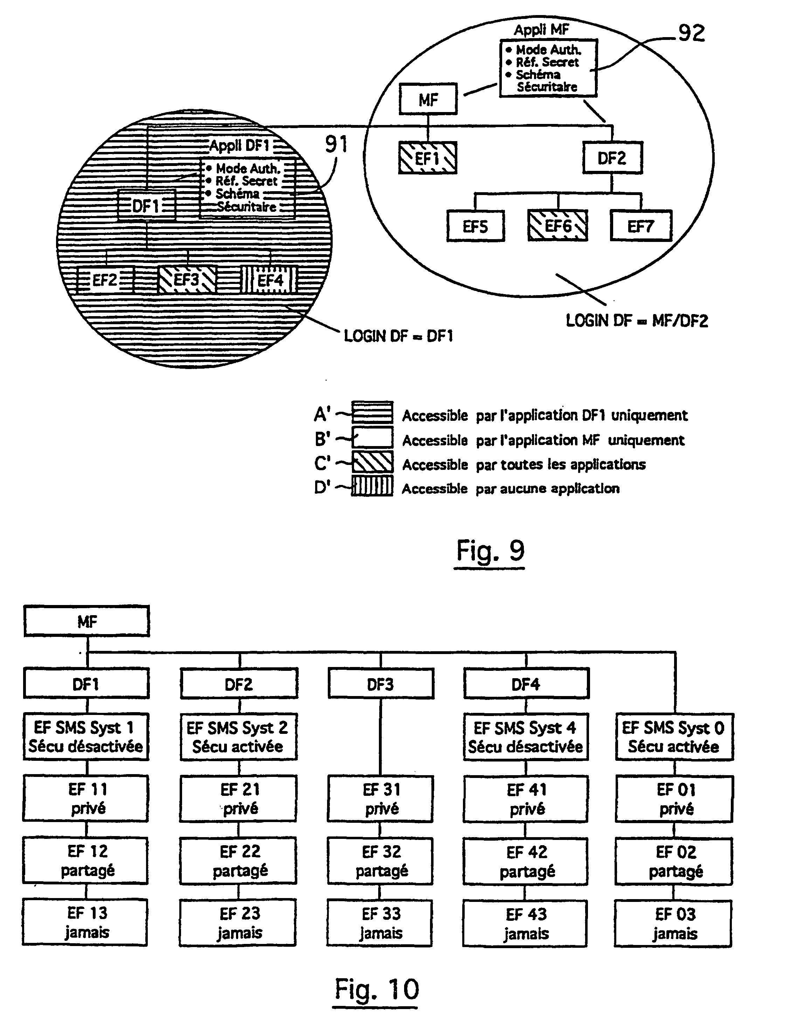

On notera que les trois valeurs "PARTAGE", "PRIVE" et "JAMAIS" sont encore discutées dans la suite de la description, en relation avec les figures 9 à 11.

Dans la politique de contrôle d'accès à distance n°2, toutes les commandes distantes, quelle que soit l'application à laquelle elles appartiennent, sont associées à une même condition d'accès à distance (cond. d'accès à dist. 2). Cette condition d'accès à distance peut par exemple prendre une valeur X parmi un autre groupe de valeurs (X, Y, Z, ...) que celui précité (et comprenant les valeurs "PARTAGE", "PRIVE" et "JAMAIS").

Comme présenté sur la figure 3B, pour chacune des applications supportées (appli. GSM, appli. dist. 1, appli. dist. 1' et appli. dist. 1"), un indicateur de politique de contrôle d'accès précise quelle politique de contrôle d'accès utiliser avec cette application (à savoir PCA standard, PCA à distance n°1 ou PCA à distance n°2).

Ainsi, on peut obtenir une partition de la mémoire de données 8 (et plus précisément de l'ensemble des fichiers utilisant une même politique de contrôle d'accès à distance) en fonction des différentes applications distantes suppportées par cette mémoire de données.

Dans l'exemple présenté sur la figure 4, tous les fichiers de la mémoire de données utilisent la politique de contrôle d'accès à distance n°1. Ainsi, vu de l'extérieur (c'est-à-dire pour les applications distantes), la mémoire de données apparaît partagée entre une application locale et trois applications distantes (Fidélité, Paiement et GSM). On notera que, dans cet exemple; l'application appélée GSM n'est pas locale mais distante.

La mémoire de données 8 possède, dans le mode de réalisation présenté à titre d'exemple, une structure hiérarchique à trois niveaux et comprend les trois types de fichiers suivants :
- un fichier maître (MF), ou répertoire principal ;
- une pluralité de fichiers spécialisés (DF, DF_{Fidélité}, DF_{Paiement}, DF_{GSM}, DF_{Télécom}), qui sont des répertoires secondaires placés sous le fichier maître ;
- une pluralité de fichiers élémentaires (EF), placés chacun soit sous un des fichiers spécialisés (dit alors fichier spécialisé parent) soit directement sous le fichier maître (dit alors fichier maître parent). On distingue huit groupes de fichiers, à savoir :

- groupe A : les fichiers uniquement accessibles par les commandes de l'application distante Fidélité, c'est-à-dire les fichiers dont la condition d'accès à distance est "PRIVE" pour l'application Fidélité ;
- groupe B : les fichiers uniquement accessibles par les commandes de l'application distante Paiement ;
- groupe C : les fichiers accessibles par les commandes des applications distantes Fidélité et Paiement, c'est-à-dire les fichiers dont la condition d'accès à distance est "PARTAGE" pour les applications Fidélité et Paiement ;
- groupe D : les fichiers uniquement accessibles par les commandes de l'application distante Télécom ;
- groupe E : les fichiers accessibles par les commandes des applications distantes Télécom et Fidélité ;
- groupe F : les fichiers accessibles par les commandes des applications distantes Paiement et Fidélité ;
- groupe G : les fichiers accessibles par les commandes des applications distantes Télécom, Paiement et Fidélité ;
- groupe H : les fichiers accessibles par les commandes d'aucune application distante, c'est-à-dire les fichiers dont la condition d'accès à distance est "JAMAIS".

D est à noter que les fichiers du groupe H restent accessibles aux commandes de l'application locale (sous réserve que les conditions d'accès standard correspondantes soient vérifiées). De même, les fichiers du groupe H seraient accessibles aux commandes d'applications distantes qui utiliseraient la politique de contrôle d'accès standard et non pas la politique de contrôle d'accès à distance (sous réserve là encore que les conditions d'accès standard correspondantes soient vérifiées).

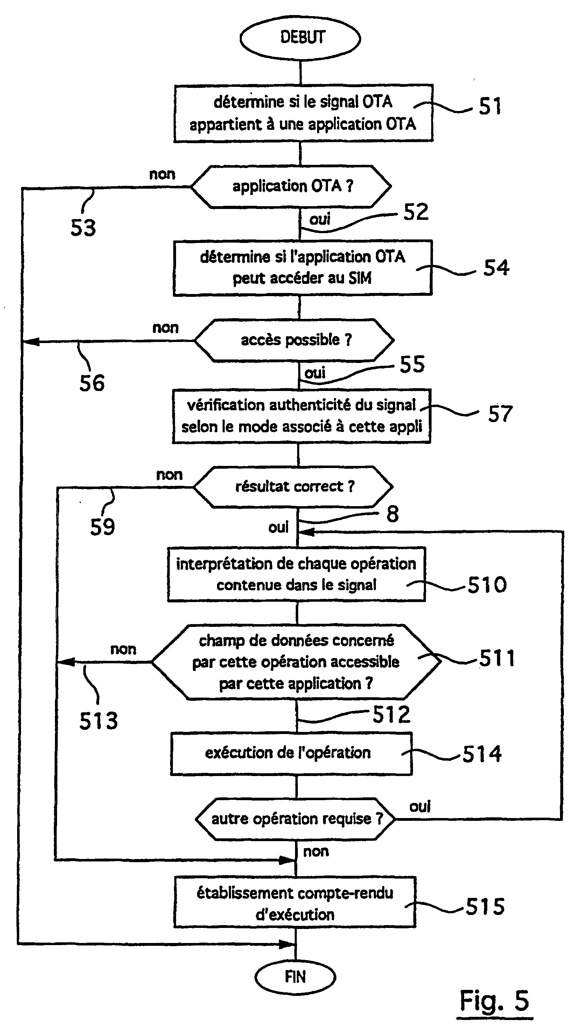

On présente maintenant, en relation avec l'organigramme de la figure 5, un mode de réalisation particulier du procédé de traitement par le module SIM d'un message court amélioré. Pour chaque message court amélioré reçu, le module SIM effectue notamment les étapes suivantes :
- il détermine (51) si le message court reçu (également appelé signal OTA) est un message court amélioré (et contient donc des commandes appartenant à une application distante) ou un message court normal ;
- il poursuit (52) le traitement s'il s'agit d'un message court amélioré, et l'interrompt (53) dans le cas contraire ;
- il détermine (54) si l'application distante émettrice du message (c'est-à-dire l'application dont des commandes sont contenues dans le message) est une application distante autorisée (étape 54 de discrimination d'application) ;
- il poursuit (55) le traitement s'il s'agit d'une application distante autorisée, et l'interrompt (56) dans le cas contraire ;
- il vérifie (57) l'authenticité du message en utilisant une référence secrète et un mode d'authentification de message associés à l'application distante émettrice du message (étape 57 d'authentification de message) ;
- il poursuit (58) le traitement s'il l'authentification est correcte, et l'interrompt (59) dans le cas contraire ;
- pour chaque commande distante contenue dans le message :
   * il interprète (510) chaque commande distante (également appelée opération) contenue dans le message ;
   * il vérifie (511) l'accessibilité de cette commande distante au fichier concerné (également appelé champ de données), en fonction de la politique de contrôle d'accès, standard ou à distance, à utiliser pour le fichier concerné avec l'application distante émettrice du message (étape 511 de sécurisation de l'exécution d'une commande) ;
   * il poursuit (512) le traitement si la commande distante peut accéder au fichier, et passe (513) dans le cas contraire à l'étape 515 d'établissement d'un compte-rendu ;
   * il exécute (514) la commande ; et
- il établit (515) un compte-rendu d'exécution.

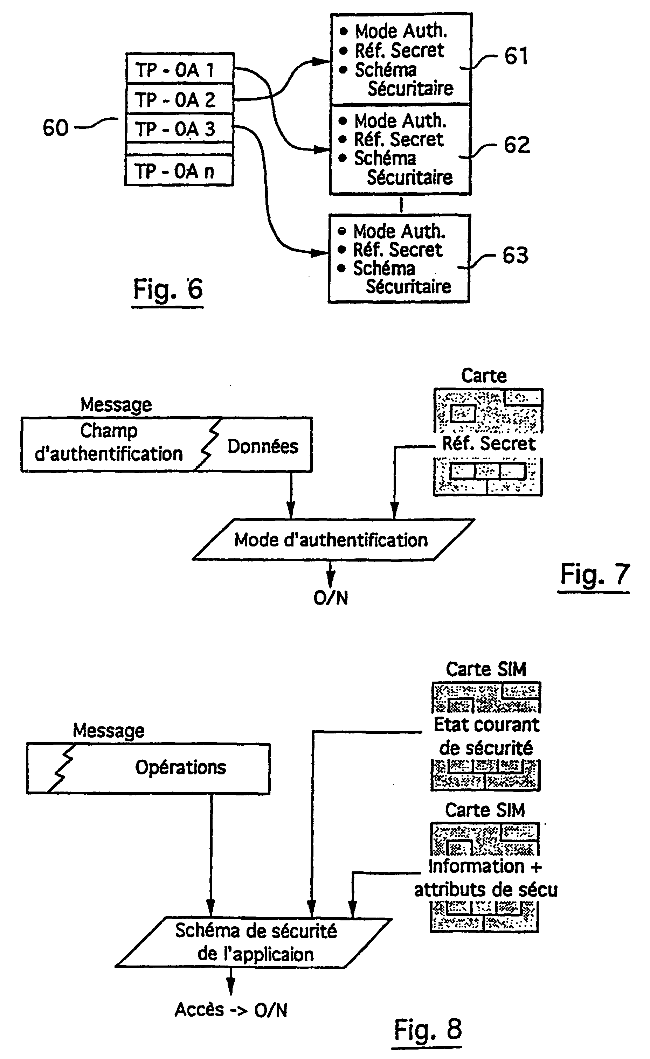

Les figures 6, 7 et 8 permettent d'expliciter les étapes de discrimination d'application 54 et d'authentification de message 57.

Comme présenté sur la figure 6, un fichier 60 de la mémoire de données 8 stocke une liste d'applications distantes autorisées. Ce fichier 60, appelé fichier élémentaire d'entrée (ou encore EF SMS Log), contient par exemple les adresses (TP-OA 1 à TP-OA n) de chacun des fournisseurs d'application distante autorisée. Ces adresses sont appelées adresses TP-OA, pour "TP-Originating-Addresses" en langue anglaise. Par ailleurs, chaque message court amélioré comprend dans son en-tête (cf figure 2) un champ "TP-OA".

Ainsi, lors de l'étape 54 de discrimination d'application 54, le module SIM identifie l'application distante émettrice du message en s'assurant que l'adresse TP-OA du message est identique à l'une des adresses TP-OA du fichier élémentaire d'entrée 60.

La figure 6 illustre également le fait que, pour chaque adresse TP-OA (c'est-à-dire chaque application distante autorisée) du fichier élémentaire d'entrée 60, le module SIM a la possibilité d'accéder, dans la mémoire de données 8, à un ensemble 61 à 63 de trois paramètres : une référence secrète (Kappli), un mode d'authentification de message (algo_id) et un schéma sécuritaire.

Ainsi, comme illustré sur la figure 7, pour effectuer l'étape 57 d'authentification de message, le module SIM utilise la référence secrète (Kappli) et le mode d'authentification de message (algo_id) qui sont associés à l'application émettrice du message et qu'il a préalablement retrouvés dans la mémoire de données 8. A partir de ces deux paramètres (Kappli et algo_id) et des données du corp du message, le module SIM calcule par exemple un cryptogramme qui doit être identique à un cryptogramme (SMS-Cert) contenu dans le corp du message (cf figure 2) pour que l'authentification du message soit réussie.

La figure 8 permet d'expliciter l'étape 511 de sécurisation de l'exécution d'une commande. Chaque commande (ou opération) d'un message est effectivement exécutée seulement si, d'après l'état courant de sécurité du module SIM ainsi que les informations et les attributs de sécurité liés à l'application distante émettrice du message, cette commande est autorisée à accéder aux fichiers sur lesquels elle travaille. Ceci correspond au schéma sécuritaire de l'application distante.

Dans la suite de la description, on présente un mode de réalisation particulier de l'invention, dans lequel chaque application distante autorisée est associée à un fichier élémentaire système (EF SMS System) de la mémoire de données 8.

Chaque fichier élémentaire système stocke une première information permettant de localiser dans la mémoire de données 8 un couple (référence secrète Kappli, mode d'authentification de message algo_id), ce couple étant associé à l'application distante autorisée à laquelle est lié ce fichier élémentaire système.

Dans le présent mode de réalisation, cette première information de localisation d'un couple (Kappli, algo_id) est un identificateur d'un fichier spécialisé sous lequel se trouve le fichier EF key_op contenant ce couple. Le fichier EF key_op peut stocker lui-même le mode d'authentification de message ou bien seulement un pointeur algo_id indiquant le lieu de stockage de ce mode d'authentification de message.

Par ailleurs, chaque message court amélioré comprend une seconde information de localisation du fichier élémentaire système auquel est liée l'application distante autorisée émettrice du message court amélioré.

Comme présenté sur la figure 2, dans le présent mode de réalisation, cette seconde information de localisation d'un fichier élémentaire système est un identificateur "DF entrée" (ou Login DF en langue anglaise) d'un fichier spécialisé ou d'un fichier maître auquel se rapporte, selon une stratégie de recherche prédéterminée dans les moyens de mémorisation de données, ce fichier élémentaire système.

Le module SIM met par exemple en oeuvre un mécanisme de recherche en amont (du type "backtracking"), consistant :
- à rechercher un fichier élémentaire système tout d'abord sous le fichier spécialisé ou le fichier maître courant (c'est-à-dire celui indiqué par l'identificateur "DF entrée"),
- puis, si aucun fichier élémentaire système n'existe sous le fichier spécialisé ou le fichier maître courant et si l'identificateur "DF entrée" n'indique pas le fichier maître, à rechercher un fichier élémentaire système directement sous le fichier maître.

Ainsi, le module SIM lit dans chaque message court amélioré filtré l'identificateur DF Id. A partir de cet identificateur "DF entrée", il retrouve le fichier élémentaire système auquel est liée l'application distante autorisée émettrice du message. Le module SIM lit dans ce fichier élémentaire système l'identificateur du fichier spécialisé sous lequel se trouve le fichier EF key_op. Dans ce fichier EF key_op, il lit le couple (Kappli, algo_id), de façon à connaître la référence secrète et le mode d'authentification de message à utiliser pour authentifier le message court amélioré filtré.

Un fichier élémentaire système au maximum peut être placé sous un fichier spécialisé. De même, un fichier élémentaire système au maximum peut être placé directement sous le fichier maître.

Si aucun fichier élémentaire système n'existe sous un fichier spécialisé, ni sous le fichier maître, les EF placés sous ce fichier spécialisé, quelle que soit la valeur de la condition d'accès à distance associée à chacun de ces fichiers élémentaires, ne sont accessibles par aucune commande distante.

De même, si aucun fichier élémentaire système n'existe directement ni sous le fichier maître, alors les fichiers élémentaires placés directement sous le fichier maître, quelle que soit la valeur de la condition d'accès à distance associée à chacun de ces fichiers élémentaires, ne sont accessibles par aucune commande distante.

Dans le cas d'un fichier dont la condition d'accès à distance possède la valeur "PRIVE" ("accès privé"), l'unique application distante dont les commandes distantes peuvent accéder à ce fichier est, sous réserve que son authentification soit réussie, l'application distante autorisée liée au même fichier élémentaire système que celui auquel se rapporte le fichier spécialisé ou fichier maître parent de ce fichier. Cette application distante autorisée est dite parente de ce fichier.

Dans le cas d'un fichier dont la condition d'accès à distance possède la valeur "PARTAGE" ("accès partagé"), les applications distantes prédéterminées dont les commandes distantes peuvent accéder à ce fichier sont, sous réserve que leur authentification soit réussie, toutes les applications distantes autorisées, quel que soit le fichier élémentaire système auquel chacune d'elles est liée.

La figure 9 présente un exemple de mémoire de données 8 partagée entre deux applications distantes, à savoir :
- l'application "DF1", dont l'EF SMS System 91 se rapporte au fichier spécialisé DF1 ; et
- l'application "MF", dont le fichier élémentaire système 92 se rapporte au fichier maître MF.

On notera que les messages émis par l'application "DF1" comportent dans leur champ "DF entrée" la valeur DF1, qui est le fichier spécialisé sous lequel se trouve le fichier élémentaire système 91 de cette application "DF1".

Par contre, les messages émis par l'application "MF" comportent dans leur champ "DF entrée" la valeur MF/DF2, et non pas la valeur MF. En fait, aucun fichier élémentaire système ne se trouvant sous ce fichier spécialisé DF2, c'est bien sous le fichier maître que le module SIM va chercher (mécanisme de "backtracking") le fichier élémentaire système 92 de cette application "MF".

Dans cet exemple, on distingue les quatre groupes de fichiers suivants :
- groupe A' : les fichiers (DF1, EF2) uniquement accessibles par les commandes de l'application distante "DF1", c'est-à-dire les fichiers dont la condition d'accès à distance est "PRIVE" pour l'application "DF1" ;
- groupe B' : les fichiers (MF, DF2, EF5, EF7) uniquement accessibles par les commandes de l'application distante "MF" ;
- groupe C' : les fichiers (EF3, EF1, EF6) accessibles par les commandes des applications distantes "DF1" et "MF", c'est-à-dire les fichiers dont la condition d'accès à distance est "PARTAGE" pour les applications "DF1" et "MF";
- groupe D' : les fichiers (EF4) accessibles par les commandes d'aucune application distante, c'est-à-dire les fichiers dont la condition d'accès à distance est "JAMAIS".

Il est important de souligner que la présente invention permet, par l'intermédiaire de commandes distantes, de créer, mettre à jour ou encore supprimer certains éléments évoqués ci-dessus, tels que notamment :
- les valeurs des conditions d'accès, standard ou à distance, des politiques de contrôle d'accès associées à chaque fichier ;
- l'indicateur de la politique de contrôle d'accès, standard ou à distance, à utiliser avec chaque application pour chaque fichier ;
- la liste des applications distantes autorisées ;
- pour chacune des applications distantes autorisées, la référence secrète et le mode d'authentification de message associés ;
- les fichiers élémentaires systèmes EF SMS System liés chacun à une application distante autorisée distincte ;
- les fichiers élémentaires EF, spécialisés DF et maîtres MF.

La figure 10 présente un second exemple de partition de la mémoire de données 8. Dans ce second exemple, la mémoire de données 8 est partagée entre quatre applications distantes, à savoir :
- l'application "MF", dont le fichier élémentaire système EF SMS System 0 présente une sécurité activée, se rapporte au fichier maître ;
- l'application "DF1", dont le fichier élémentaire système EF SMS System 1 présente une sécurité désactivée, se rapporte au fichier spécialisé DF1 ;
- l'application "DF2", dont le fichier élémentaire système EF SMS System 2 présente une sécurité activée, se rapporte au fichier spécialisé DF2 ; et
- l'application "DF4", dont le fichier élémentaire système EF SMS System 4 présente une sécurité désactivée, se rapporte au fichier spécialisé DF4.

On entend par sécurité activée, pour un fichier élémentaire système, le fait que l'indicateur de politique de contrôle d'accès contenu dans ce fichier élémentaire système prévoit l'utilisation d'une politique de contrôle d'accès à distance. De même, on entend par sécurité désactivée, pour un fichier élémentaire système, le fait que l'indicateur de politique de contrôle d'accès contenu dans ce fichier élémentaire système prévoit l'utilisation de la politique de contrôle d'accès standard.

Il est à noter que le fichier spécialisé DF3, ainsi que tous les fichiers placés sous le fichier spécialisé DF3, ont pour application parente "MF' puisqu'il n'existe aucun fichier élémentaire système sous le fichier spécialisé DF3.

Chaque fichier élémentaire est associé à une valeur de condition d'accès à distance ("jamais", "privé", ou "partagé").

Le tableau de l'annexe 2 résume les différentes situations d'accès (accès autorisé ou refusé) pour chaque fichier élémentaire de la figure 10, en fonction du fichier spécialisé (ou fichier maître) spécifié dans l'en-tête du message.

Pour chaque fichier élémentaire à accéder par la commande (première colonne), on a indiqué:
- la valeur de condition d'accès à distance associée à ce fichier (première colonne également) ;
- l'EF ESMS System auquel se rapporte le fichier à accéder (seconde colonne) ; et
- l'état (activé ou désactivé) de la sécurité de cet EF ESMS System (seconde colonne également).

Pour chaque fichier spécialisé (ou fichier maître) spécifié dans l'en-tête du message, on a indiqué le fichier spécialisé (ou fichier maître) parent du fichier élémentaire système où est effectuée l'authentification de message. On notera qu'aucune authentification de message n'est effectuée pour les fichiers spécialisés DF1 et DF4, dont les fichiers élémentaires systèmes (1 et 4 respectivement) présentent chacun une sécurité désactivée.

Ce tableau montre clairement que :
- si un fichier élémentaire système existe dans un fichier spécialisé, un fichier élémentaire de ce fichier spécialisé dont la condition d'accès à distance est "PRIVE" ne peut pas être accédé à travers une commande distante contenue dans un message authentifié dans un autre fichier spécialisé ;
- si aucun fichier élémentaire système n'existe dans un fichier spécialisé mais existe dans le fichier maître, un fichier élémentaire de ce fichier spécialisé dont la condition d'accès à distance est "PRIVE" ne peut pas être accédé à travers une commande distante contenue dans un message authentifié dans un autre fichier spécialisé, différent du fichier maître et contenant lui-même un fichier élémentaire système ;
- si aucun fichier élémentaire système n'existe dans un fichier spécialisé, ni dans le fichier maître, aucun message ne peut être authentifié sous ce fichier spécialisé et un fichier élémentaire de ce fichier spécialisé, quelle que soit sa condition d'accès à distance, ne peut pas être accédé à travers une commande distante (en d'autres termes, si aucun fichier élémentaire système n'est attaché à un fichier, tout accès à distance - à travers une commande distante - est interdit) ;
- dans tous les cas, un fichier élémentaire dont la condition d'accès à distance est "PARTAGE" peut être accédé à travers une commande distante contenue dans un message qui a été authentifié.

Ci-dessous, dans un but de simplification, on note :
- "LA" (pour "Login Appli" en langue anglaise) le fichier élémentaire système qui se rapporte au fichier spécialisé DF spécifié dans l'en-tête du message, et
- "PA" (pour "Parent Appli" en langue anglaise) le fichier élémentaire système qui se rapporte au fichier à accéder.

La sécurité peut alors, d'une façon plus générale, être entièrement et formellement décrite avec les sept règles suivantes :
- R1. Si aucun fichier PA ne peut être trouvé,
   -> Alors l'accès à distance est interdit.
- R2. Si un fichier PA est trouvé, mais la condition d'accès à distance du fichier à accéder est "PRIVE" :
   -> Alors l'accès à distance est interdit.
- R3. Si un fichier PA est trouvé, et la condition d'accès à distance du fichier à accéder est "PRIVE", et le fichier PA n'est pas le même que le fichier LA :
   -> Alors l'accès à distance est interdit.
- R4. Si un fichier PA est trouvé, et la condition d'accès à distance du fichier à accéder est "PRIVE", et le fichier PA est le même que le fichier LA, et la sécurité est désactivée dans le fichier LA : .
   -> Alors l'accès à distance dépend des conditions d'accès standard au fichier.
- R5. Si un fichier PA est trouvé, et la condition d'accès à distance du fichier à accéder est "PRIVE", et le fichier PA est le même que le fichier LA, et la sécurité est activée dans le fichier LA :
   -> Alors l'accès à distance est autorisé.
- R6. Si un fichier PA est trouvé, et la condition d'accès à distance du fichier à accéder est "PARTAGE", et la sécurité est désactivée dans le fichier LA :
   -> Alors l'accès à distance dépend des conditions d'accès standard au fichier.
- R7. Si un fichier PA est trouvé, et la condition d'accès à distance du fichier à accéder est "PARTAGE", et la sécurité est activée dans le fichier LA :
   - > Alors l'accès à distance est autorisé.

| Annexe 1 | | | | |
|---|---|---|---|---|
| Politique de contrôle d'accès(PCA) | Application | Commande | Condition d'accès | Valeur de la condition d'accès |
| PCA Standard | indifférent | commande (dist ou loc) 1 | cond. d'acc std 1 | ALWAYS |
| | indifférent | commande (dist ou loc) 2 | cond. d'acc std 2 | CHV 1 |
| | . . . | . . . | . . . | . . . |
| | indifférent | commande (dist ou loc) k | cond. d'acc std k | NEVER |
| PCA à distance N°1 | appli. distante 1 | commande dist. 1 | condition d'accès à distance 1 | PARTAGE |
| | | commande dist. 2 | | |
| | | . . . | | |
| | | commande dist. m | | |
| | appli. distante 1' | commande dist. 1' | | |
| | | commande dist. 2' | | |
| | | . . . | | |
| | | commande dist. m' | | |
| | appli. distante 1" | commande dist. 1" | | |
| | | commande dist. 2" | | |
| | | . . . | | |
| | | commande dist. m" | | |
| | . . . | | | |
| PCA à distance N°2 | appli. distante 1 | commande dist. 1 | condition d'accès à distance 2 | X |
| | | commande dist. 2 | | |
| | | . . . | | |
| | | commande dist. m | | |
| | appli. distante 1' | commande dist. 1' | | |
| | | commande dist. 2' | | |
| | | . . . | | |
| | | commande dist. m' | | |
| | appli. distante 1" | commande dist. 1" | | |
| | | commande dist. 2" | | |
| | | . . . | | |
| | | commande dist. m" | | |
| | . . . | | | |

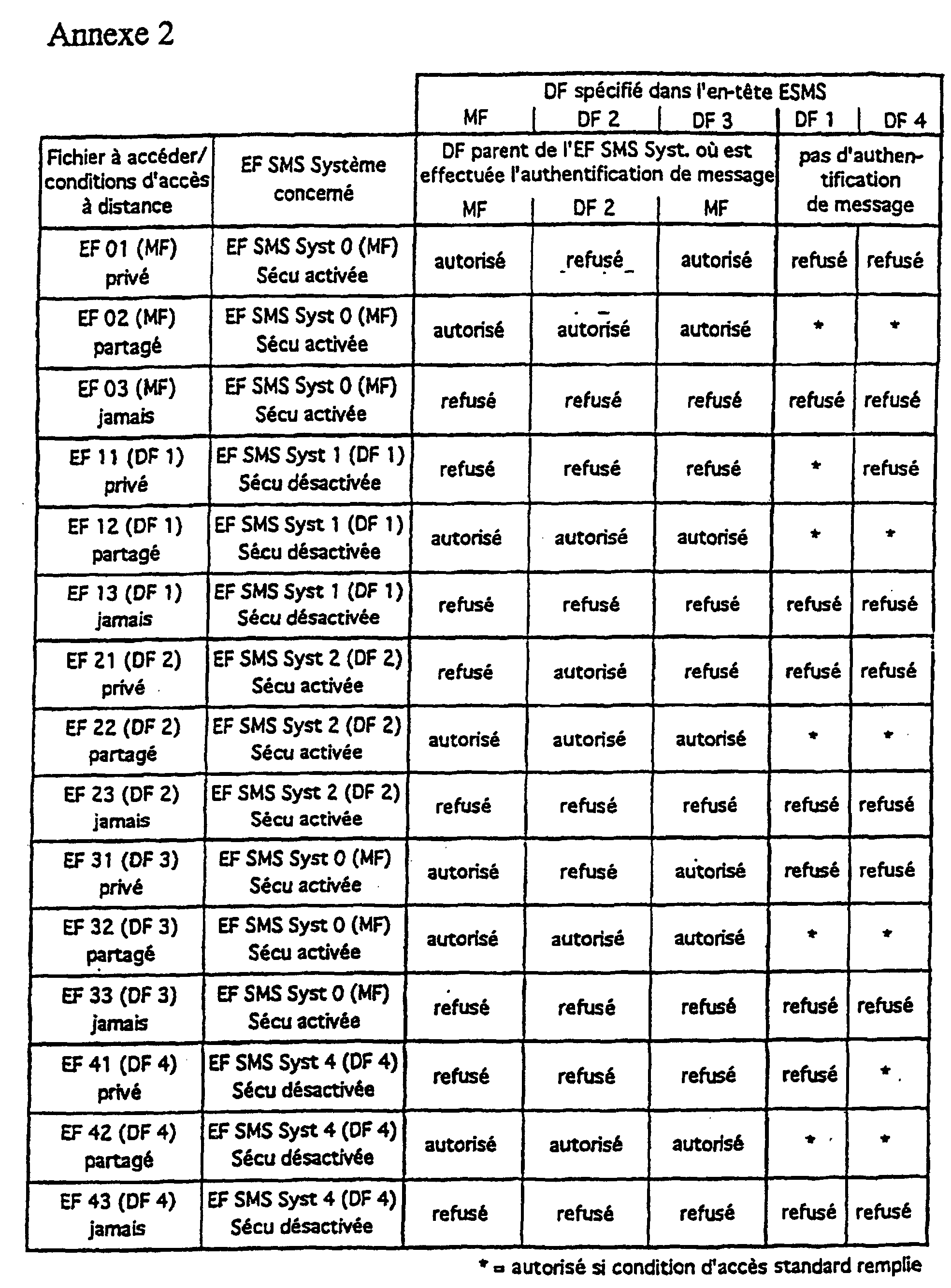

## Revendications

1. Système de communication, du type comprenant au moins un terminal (ME ; 4) coopérant avec une carte utilisateur à microprocesseur (5),
chaque carte utilisateur incluant des moyens (8) de mémorisation de données comprenant une pluralité d'objets (MF, DF, EF), lesdits moyens (8) de mémorisation de données servant de support à au moins deux applications distinctes ladite carte utilisateur comprenant des moyens (6, 7) d'exécution de commandes appartenant auxdites applications,
chaque objet compris dans les moyens de mémorisation de données d'une carte utilisateur étant associé à une première politique de contrôle d'accès définie par un jeu de premières conditions d'accès , chacune desdites premières conditions d'accès s'appliquant, pour ledit objet, à un groupe d'au moins une commande appartenant à la ou aux applications utilisant ladite première politique de contrôle d'accès,
**caractérisé en ce que** chaque objet est également associé à au moins une autre politique de contrôle d'accès, chaque autre politique de contrôle d'accès étant définie par un jeu d'au moins une condition d'accès alternative, chaque condition d'accès alternative d'une autre politique de contrôle d'accès donnée s'appliquant, pour ledit objet, à un groupe d'au moins une commande appartenant à la ou aux applications utilisant ladite autre politique de contrôle d'accès donnée,
et **en ce que** chaque objet est également associé à une pluralité d'indicateurs de politique de contrôle d'accès, chaque indicateur de politique de contrôle d'accès indiquant, pour une desdites applications, quelle politique de contrôle d'accès, à savoir première ou autre, utiliser avec cette application, lesdits indicateurs de politique de contrôle d'accès étant stockés dans lesdits moyens (8) de mémorisation de données.

2. Système selon la revendication 1, **caractérisé en ce que**, pour chaque objet, au moins une autre politique de contrôle d'accès est spécifique à une des applications, chaque condition d'accès alternative de cette autre politique de contrôle d'accès spécifique s'appliquant, pour ledit objet, à un groupe d'au moins une commande appartenant à l'unique application utilisant cette autre politique de contrôle d'accès spécifique.

3. Système selon l'une quelconque des revendications 1 et 2, **caractérisé en ce que**, pour chaque objet, au moins une autre politique de contrôle d'accès est entièrement commune à au moins deux applications, chaque condition d'accès alternative de cette autre politique de contrôle d'accès entièrement commune s'appliquant, pour ledit objet, à un groupe d'au moins une commande appartenant auxdites au moins deux applications utilisant cette autre politique de contrôle d'accès entièrement commune.

4. Système selon l'une quelconque des revendications 1 à 3, **caractérisé en ce que**, pour chaque objet, au moins une autre politique de contrôle d'accès est partiellement commune à au moins deux applications,
certaines des conditions d'accès alternatives de cette autre politique de contrôle d'accès partiellement commune s'appliquant, pour ledit objet, à un groupe d'au moins une commande appartenant auxdites au moins deux applications utilisant cette autre politique de contrôle d'accès commune,
d'autres des conditions d'accès alternatives de cette autre politique de contrôle d'accès partiellement commune s'appliquant, pour ledit objet, à un groupe d'au moins une commande appartenant uniquement à l'une desdites au moins deux applications utilisant cette autre politique de contrôle d'accès commune.

5. Système selon l'une quelconque des revendications 1 à 4, du type permettant une radiocommunication cellulaire, **caractérisé en ce que** le terminal est une station mobile (MS ; 1), ladite carte utilisateur étant un module d'identification d'abonné (5).

6. Système selon l'une quelconque des revendications 1 à 5, du type comprenant en outre au moins un centre de service de messages (C-SMS),
lesdits moyens de mémorisation de données de la carte utilisateur servant de support à au moins une application locale et au moins une application distante de ladite carte utilisateur, les commandes étant dites locales, lorsqu'elles appartiennent à ladite application locale, ou distantes, lorsqu'elles appartiennent à ladite application distante,
chaque terminal (4) pouvant recevoir des messages, de type normal ou amélioré, émis par ledit centre de service de messages, chaque carte utilisateur (5) comprenant des moyens (9) de stockage et de traitement des messages reçus par le terminal avec lequel elle coopère,
les messages normaux contenant des données brutes constituant une information destinée à être fournie à l'abonné via notamment un écran d'affichage du terminal, les messages améliorés (20) contenant des commandes distantes (cmd 1, cmd 2, ...),
**caractérisé en ce que** lesdits moyens (8) de mémorisation de données de chaque carte utilisateur stockent également une liste d'applications distantes autorisées (TP-OA 1 à TP-OA n),
et **en ce que** chaque carte utilisateur comprend également des moyens de discrimination des messages améliorés, permettant de bloquer chaque message amélioré qui contient des commandes distantes n'appartenant pas à une desdites applications distantes autorisées.

7. Système selon la revendication 6, **caractérisé en ce que** lesdits moyens de mémorisation de données de chaque carte utilisateur stockent également, pour chacune desdites applications distantes autorisées, une référence secrète (Kappli) et un mode d'authentification de message (algo_id) associés,
et **en ce que** chaque carte utilisateur comprend également des moyens d'authentification des messages améliorés discriminés, permettant d'authentifier un message amélioré discriminé en utilisant la référence secrète et le mode d'authentification de message associés, dans lesdits moyens de mémorisation de données, à l'application distante autorisée à laquelle appartiennent les commandes contenues dans ledit message amélioré discriminé.

8. Système selon l'une quelconque des revendications 1 à 7, **caractérisé en ce que**, pour chaque objet, la ou au moins une des autres politiques de contrôle d'accès, dite seconde politique de contrôle d'accès, est définie par un jeu d'au moins une condition d'accès alternative particulière, chaque condition d'accès alternative particulière pouvant prendre notamment les valeurs suivantes :
- "aucun accès" ("JAMAIS") : si ledit objet n'est accessible par aucune commande dudit groupe d'au moins une commande auquel s'applique ladite condition d'accès alternative particulière ;
- "accès privé" ("PRIVE") : si ledit objet n'est accessible que par les commandes appartenant à une unique application prédéterminée, parmi ledit groupe d'au moins une commande auquel s'applique ladite condition d'accès alternative particulière ;
- "accès partagé" ("PARTAGE") : si ledit objet est accessible par les commandes appartenant à au moins deux applications prédéterminées, parmi ledit groupe d'au moins une commande auquel s'applique ladite condition d'accès alternative particulière.

9. Système selon l'une quelconque des revendications 6 à 8, **caractérisé en ce que**, pour chaque objet, au moins une autre politique de contrôle d'accès, dite politique de contrôle d'accès à distance, est définie par un jeu d'au moins une condition d'accès à distance (cond. d'acc. à dist. 1, cond. d'acc. à dist. 2), chaque condition d'accès à distance s'appliquant, pour ledit objet, à un groupe d'au moins une commande distante appartenant à la ou aux applications distantes utilisant ladite politique de contrôle d'accès à distance,
et **en ce que**, pour chaque objet, seuls les indicateurs de politique de contrôle d'accès associés chacun à une des applications distantes peuvent indiquer ladite politique de contrôle d'accès à distance.

10. Système selon les revendications 8 et 9, **caractérisé en ce que**, pour chaque objet, chaque condition d'accès à distance peut prendre les mêmes valeurs ("JAMAIS", "PRIVE", "PARTAGE") que lesdites conditions d'accès alternatives particulières.

11. Système selon l'une quelconque des revendications 7 à 10, lesdits moyens de mémorisation de données de chaque carte utilisateur possèdant une structure hiérarchique à au moins trois niveaux et comprenant au moins les trois types de fichiers suivants :
- fichier maître (MF), ou répertoire principal ;
- fichier spécialisé (DF), ou répertoire secondaire placé sous ledit fichier maître ;
- fichier élémentaire (EF), placé sous un desdits fichiers spécialisés, dit fichier spécialisé parent, ou directement sous ledit fichier maître, dit fichier maître parent,
**caractérisé en ce que** lesdits moyens de mémorisation de données de chaque carte utilisateur comprennent au moins un fichier élémentaire système, chaque fichier élémentaire système étant lié à une application distante autorisée et stockant une première information de localisation de la référence secrète et du mode d'authentification de message associés à cette application distante autorisée à laquelle il est lié,
et **en ce que** chaque message amélioré comprend une seconde information ("DF entrée") de localisation du fichier élémentaire système auquel est liée l'application distante autorisée à laquelle appartiennent les commandes contenues dans ledit message amélioré,
lesdits moyens d'authentification lisant dans chaque message amélioré discriminé ladite seconde information de localisation du fichier élémentaire système, de façon à lire dans le fichier élémentaire système ladite première information de localisation de la référence secrète et du mode d'authentification de message à utiliser pour authentifier ledit message amélioré discriminé.

12. Système selon la revendication 11, **caractérisé en ce que** chaque fichier élémentaire système est placé sous un fichier spécialisé (DF) ou directement sous le fichier maître (MF), un fichier élémentaire système au maximum pouvant être placé sous chaque fichier spécialisé, et un fichier élémentaire système au maximum pouvant être placé directement sous le fichier maître.

13. Système selon la revendication 12, **caractérisé en ce que** si aucun fichier élémentaire système n'existe sous un fichier spécialisé (DF), ni sous le fichier maître (MF), alors chaque fichier élémentaire (EF) placé sous ledit fichier spécialisé, quelle que soit la valeur des conditions d'accès à distance associées à ce fichier élémentaire, n'est accessible par aucune commande distante,
et **en ce que** si aucun fichier élémentaire système n'existe directement sous le fichier maître (MF), alors chaque fichier élémentaire (EF) placé directement sous le fichier maître, quelle que soit la valeur des conditions d'accès à distance associées à ce fichier élémentaire, n'est accessible par aucune commande distante.

14. Système selon l'une quelconque des revendications 11 à 13, **caractérisé en ce que** ladite seconde information de localisation du fichier élémentaire système est un identificateur ("DF entrée") d'un fichier spécialisé (DF) ou d'un fichier maître (MF) auquel se rapporte ledit fichier élémentaire système selon une stratégie de recherche prédéterminée dans les moyens de mémorisation de données.

15. Système selon la revendication 14, **caractérisé en ce que** ladite stratégie de recherche prédéterminée dans les moyens de mémorisation de données est un mécanisme de recherche en amont, consistant à rechercher si un fichier élémentaire système existe sous le fichier spécialisé (DF) ou le fichier maître (MF) indiqué par ledit identificateur, et, dans la négative et si l'identificateur n'indique pas le fichier maître, à rechercher si un fichier élémentaire système existe directement sous le fichier maître.

16. Système selon la revendication 10 et l'une quelconque des revendications 11 à 15, **caractérisé en ce que**, dans le cas d'un fichier dont une des conditions d'accès à distance possède la valeur "accès privé", ladite unique application distante prédéterminée dont les commandes distantes peuvent accéder audit fichier est, sous réserve que son authentification soit réussie, l'application distante autorisée parente dudit fichier, c'est-à-dire l'application distante autorisée liée au même fichier élémentaire système que celui auquel se rapporte le fichier spécialisé (DF) parent ou le fichier maître (MF) parent dudit fichier,
et **en ce que**, dans le cas d'un fichier dont la condition d'accès à distance possède la valeur "accès partagé", lesdites au moins deux applications distantes prédéterminées dont les commandes distantes peuvent accéder audit fichier sont, sous réserve que leur authentification soit réussie, toutes les applications distantes autorisées, quel que soit le fichier élémentaire système auquel chacune d'elles est liée.

17. Système selon l'une quelconque des revendications 11 à 16, **caractérisé en ce que** chaque fichier élémentaire système comprend un ensemble distinct d'indicateurs de politique de contrôle d'accès, chaque indicateur de politique de contrôle d'accès indiquant, pour une desdites applications, quelle politique de contrôle d'accès, à savoir première ou autre, utiliser avec cette application,
ledit ensemble distinct d'indicateurs de politique de contrôle d'accès étant associé à tous les fichiers (EF, DF, MF) dont le fichier spécialisé (DF) parent ou le fichier maître (MF) parent se rapporte audit fichier élémentaire système

18. Carte utilisateur à microprocesseur du type destiné à coopérer avec un terminal (ME ; 4) de façon à constituer un équipement terminal (MS ; 1) d'un système de communication selon l'une quelconque des revendications 1 à 17, ladite carte
incluant des moyens (8) de mémorisation de données comprenant une pluralité d'objets (MF, DF, EF), lesdits moyens (8) de mémorisation de données servant de support à au moins deux applications distinctes , ladite carte utilisateur comprenant des moyens (6, 7) d'exécution de commandes appartenant auxdites applications,
chaque objet compris dans les moyens de mémorisation de données d'une carte utilisateur étant associé à une première politique de contrôle d'accès définie par un jeu de premières conditions d'accès , chacune desdites premières conditions d'accès s'appliquant, pour ledit objet, à un groupe d'au moins une commande appartenant à la ou aux applications utilisant ladite première politique de contrôle d'accès, et **caractérisé en ce que** chaque objet des moyens de mémorisation de données de ladite carte utilisateur est également associé à au moins une autre politique de contrôle d'accès (PCA à distance n°1, PCA à distance n°2), chaque autre politique de contrôle d'accès étant définie par un jeu d'au moins une condition d'accès alternative (cond. d'acc. à dist. 1, cond. d'acc. à dist. 2), chaque condition d'accès alternative d'une autre politique de contrôle d'accès donnée s'appliquant, pour ledit objet, à un groupe d'au moins une commande appartenant à la ou aux applications utilisant ladite autre politique de contrôle d'accès donnée,
et **en ce que** chaque objet est également associé à une pluralité d'indicateurs de politique de contrôle d'accès, chaque indicateur de politique de contrôle d'accès indiquant, pour une desdites applications, quelle politique de contrôle d'accès, à savoir première ou autre, utiliser avec cette application, lesdits indicateurs de politique de contrôle d'accès étant stockés dans les moyens (8) de mémorisation de données de ladite carte utilisateur.

19. Procédé de gestion sécurisée et indépendante d'au moins deux applications distantes, par une carte utilisateur à microprocesseur (5) du type destiné à coopérer avec un terminal (ME ; 4) de façon à constituer un équipement terminal (MS ; 1) d'un système de communication selon l'une quelconque des revendications 6 à 17,
**caractérisé en ce que**, pour chaque message amélioré reçu, ladite carte utilisateur effectue l'étape suivante (511) : pour chaque commande distante contenue dans ledit message amélioré, vérification de l'accessibilité de cette commande distante à l'objet concerné, ladite vérification de l'accessibilté s'appuyant sur une politique de contrôle d'accès, première ou à distance, à utiliser pour ledit objet concerné avec ladite application distante courante.

20. Procédé selon la revendication 19, **caractérisé en ce que**, pour chaque message amélioré reçu, ladite carte utilisateur effectue également une étape préalable (54) de discrimination dudit message amélioré, de façon à ne poursuivre son traitement que si l'application distante, dite application distante courante, à laquelle appartiennent les commandes distantes qu'il contient est une application distante autorisée.

21. Procédé selon l'une quelconque des revendication 19 et 20, **caractérisé en ce que**, pour chaque message amélioré reçu, ladite carte utilisateur effectue également une étape préalable (57) d'authentification dudit message amélioré, en utilisant une référence secrète et un mode d'authentification de message associés à ladite application distante courante.

22. Procédé selon l'une quelconque des revendications 19 à 21, **caractérisé en ce que** au moins certains des éléments appartenant au groupe suivant peuvent être créés et/ou mis à jour et/ou supprimés par l'intermédiaire de commandes distantes :
- les valeurs des conditions d'accès, notamment premières ou à distance, des politiques de contrôle d'accès associées à chaque objet ;
- l'indicateur de politique de contrôle d'accès, notamment première ou à distance, à utiliser avec chaque application pour chaque objet ;
- la liste des applications distantes autorisées ;
- pour chacune des applications distantes autorisées de ladite liste, la référence secrète et le mode d'authentification de message associés ;
- le ou lesdits fichiers élémentaires systèmes liés chacun à une application distante autorisée distincte ;
- les fichiers élémentaires (EF), spécialisé (DF) et maître (MF).

## Patentansprüche

1. Kommunikationssystem von der Art, umfassend wenigstens ein mit einer Anwenderkarte mit Mikroprozessor (5) zusammenwirkendes Terminal (ME; 4),
wobei jede Anwenderkarte Datenspeichermittel (8) mit einer Vielzahl von Objekten (MF, DF, EF) umfasst, wobei die genannten Datenspeichermittel (8) als Träger für wenigstens zwei unterschiedliche Anwendungen dienen, wobei die genannte Anwenderkarte Ausführungsmittel (6, 7) von zu den genannten Anwendungen gehörenden Befehlen umfassen,
wobei jedes in den Datenspeichermitteln einer Anwenderkarte einer ersten, durch einen Satz erster Zugangsbedingungen definierten Zugangskontrollpolitik zugeordnet ist, wobei jede der genannten ersten Zugangsbedingungen für das genannte Objekt auf eine Gruppe von wenigstens einem zu der oder den die genannte erste Zugangskontrollpolitik nutzende Anwendung(en) gehörenden Befehl angewendet wird,
**dadurch gekennzeichnet, dass** jedes Objekt ebenfalls wenigstens einer anderen Zugangskontrollpolitik zugeordnet ist, wobei jede andere Zugangskontrollpolitik durch einen Satz von wenigstens einer alternativen Zugangsbedingung definiert wird, wobei jede alternative Zugangsbedingung einer anderen vorgegebenen Zugangskontrollpolitik für das genannte Objekt auf eine Gruppe von wenigstens einem zu der oder die genannte vorgegebene Zugangskontrollpolitik nutzende (n) den Anwendung(en) gehörenden Befehl angewendet wird,
und dass jedes Objekt ebenfalls einer Vielzahl von Zugangskontrollpolitikindikatoren zugeordnet ist, wobei jeder Zugangskontrollpolitikindikator für eine der genannten Anwendungen anzeigt, welche Zugangskontrollpolitik, nämlich die erste oder eine andere, mit dieser Anwendung genutzt wird, wobei die genannten Zugangskontrollpolitikindiktatoren in den genannten Datenspeichermitteln (8) gespeichert werden.

2. System gemäß Anspruch 1, **dadurch gekennzeichnet, dass** für jedes Objekt wenigstens eine andere Zugangskontrollpolitik für eine der Anwendungen spezifisch ist, wobei jede alternative Zugangsbedingung dieser anderen spezifischen Zugangskontrollpolitik für das genannte Objekt auf eine Gruppe von wenigstens einem zur einzigen, die andere spezifische Zugangskontrollpolitik nutzende Anwendung gehörenden Befehl angewendet wird.

3. System gemäß Anspruch 1 und 2, **dadurch gekennzeichnet, dass** für jedes Objekt wenigstens eine andere Zugangskontrollpolitik vollständig gemeinsam mit wenigstens zwei Anwendungen ist, wobei jede alternative Zugangsbedingung dieser vollständig gemeinsamen anderen Zugangskontrollpolitik für das genannte Objekt auf eine Gruppe von wenigstens einem zu den wenigstens zwei zu den genannten, wenigstens zwei diese andere vollständig gemeinsame Zugangskontrollpolitik nutzende Anwendungen gehörenden Befehl angewendet wird.

4. System gemäß Anspruch 1 bis 3, **dadurch gekennzeichnet, dass** für jedes Objekt wenigstens eine andere Zugangkontrollpolitik teilweise mit wenigstens zwei Anwendungen gemeinsam ist,
wobei bestimmte alternative Zugangsbedingungen dieser anderen, teilweise gemeinsamen Zugangskontrollpolitik für das genannte Objekt auf eine Gruppe von wenigstens einem zu wenigstens zwei diese andere gemeinsame Zugangskontrollpolitik nutzende Anwendungen gehörenden Befehl angewendet wird,
wobei andere alternative Zugangsbedingungen dieser anderen teilweise gemeinsamen Zugangskontrollpolitik für das genannte Objekt auf eine Gruppe von wenigstens einem ausschließlich zu einer der genannten wenigstens zwei diese andere gemeinsame Zugangskontrollpolitik nutzende Anwendungen gehörenden Befehl angewendet werden.

5. System gemäß Anspruch 1 bis 4 von der eine zellulare Funkkommunikation erlaubenden Art, **dadurch gekennzeichnet, dass** das Terminal eine mobile Station (MS; 1) ist, wobei die genannte Anwenderkarte ein Teilnehmeridentifizierungsmodul (5) ist.

6. System gemäß Anspruch 1 bis 5, von der darüber hinaus wenigstens ein Meldungsdienstcenter (C-SMS) umfassenden Art,
wobei die Datenspeichermittel der Anwenderkarte als Träger für wenigstens eine lokale Anwendung und wenigstens eine entfernte Anwendung der genannten Anwenderkarte dienen, wobei die Befehle so genannte lokale Befehle sind, wenn sie zu der genannten lokalen Anwendung gehören, oder entfernte Befehle, wenn sie zur genannten entfernten Anwendung gehören,
wobei jedes Terminal (4) von dem genannten Meldungsdienstcenter ausgegebene Meldungen der normalen oder verbesserten Art empfangen kann, wobei jede Anwenderkarte (5) Speicher- und Verarbeitungsmittel (9) der vom Terminal, mit dem sie zusammenwirkt, empfangenen Meldungen umfasst,
wobei die normalen Meldungen eine zur Lieferung an den Teilnehmer über insbesondere einen Anzeigebildschirm des Terminals bestimmte Information bildende rohe Daten enthält, wobei die verbesserten Meldungen (20) entfernte Befehle (cmd 1, cmd 2, usw.) enthalten,
**dadurch gekennzeichnet, dass** die genannten Datenspeichermittel (8) jeder Anwenderkarte ebenfalls eine Liste entfernter zugelassener Anwendungen (TP-OA 1 bis TP-OA n) speichern,
und dass jede Anwenderkarte ebenfalls die Blockierung jeder verbesserten Meldung, die nicht zu einer genannten entfernten zugelassenen Anwendungen gehörenden entfernte Befehle enthält, erlaubende Unterscheidungsmittel der verbesserten Meldungen umfasst.

7. System gemäß Anspruch 6, **dadurch gekennzeichnet, dass** die genannten Datenspeichermittel jeder Anwenderkarte ebenfalls für jede der genannten entfernten zugelassenen Anwendungen eine zugeordnete geheime Referenz (Kappli) und einen zugeordneten Meldungsauthentifizierungsmodus (algo_id) speichern,
und dass jede Anwenderkarte ebenfalls in den genannten Datenspeichermitteln unter Verwendung der zugeordneten geheimen Referenz und des zugeordneten Meldungsauthentifizierungsmodus die Authentifizierung einer verbesserten unterschiedlichen Meldung erlaubende Authentifizierungsmittel der verbesserten unterschiedlichen Meldungen auf die entfernte zugelassene Anwendung umfasst, zu der die in der genannten verbesserten unterschiedlichen Meldung enthaltenen Befehle gehören.

8. System gemäß Anspruch 1 bis 7, **dadurch gekennzeichnet, dass** für jedes Objekt die oder wenigstens eine der anderen, als so genannte zweite Zugangskontrollpolitik bezeichneten Zugangskontrollpolitiken durch einen Satz von wenigstens einer besonderen alternativen Zugangsbedingung definiert ist, wobei jede besondere alternative Zugangsbedingung insbesondere die folgenden Werte annehmen kann:
- "kein Zugang" ("NIEMALS"): wenn das genannte Objekt durch keinen Befehl der genannten Gruppe von wenigstens einem Befehl zugänglich ist, auf den die genannte besondere alternative Zugangsbedingung angewendet wird;
- "privater Zugang" ("PRIVAT"): wenn das genannte Objekt nur durch die zu einer einzigen vorbestimmten Anwendung gehörenden Befehle aus der genannten Gruppe von wenigstens einem Befehl zugänglich ist, auf den die genannte besondere alternative Zugangsbedingung anwendet wird;
- "geteilter Zugang" ("TEILUNG"): wenn das genannte Objekt durch die zu wenigstens zwei vorbestimmten Anwendungen gehörenden Befehle aus der genannten Gruppe von wenigstens einem Befehl zugänglich ist, auf den die genannte besondere alternative Zugangsbedingung angewendet wird.

9. System gemäß Anspruch 6 bis 8, **dadurch gekennzeichnet, dass** für jedes Objekt wenigstens eine andere Zugangskontrollpolitik, als so genannte entfernte Zugangskontrollpolitik bezeichnet, durch einen Satz von wenigstens einer entfernten Zugangsbedingung (cond. d'acc. à dist. 1, cond. d'acc. à dist. 2) definiert wird, wobei jede entfernte Zugangsbedingung für das genannte Objekt auf eine Gruppe von wenigstens einem zu der oder den entfernten, die genannte entfernte Zugangskontrollpolitik nutzende Anwendung(en) gehörenden entfernten Befehl angewendet wird,
und dass für jedes Objekt nur die jeder der entfernten Anwendungen zugeordneten Zugangskontrollpolitiktindikatoren die genannte entfernte Zugangskontrollpolitik anzeigen können.

10. System gemäß Anspruch 8 bis 9, **dadurch gekennzeichnet, dass** für jedes Objekt jede entfernte Zugangsbedingung dieselben Werte ("NIEMALS", "PRIVAT", "TEILUNG") übernehmen kann, wie die genannten besonderen alternativen Zugangsbedingungen.

11. System gemäß Anspruch 7 bis 10, wobei die genannten Datenspeichermittel jeder Anwenderkarte eine hierarchische Struktur mit wenigstens drei Niveaus besitzen und wenigstens die drei folgenden Arten von Dateien umfassen:
- Masterdatei (MF) oder Hauptverzeichnis;
- Spezialdatei (DF) oder unter dem genannten Masterverzeichnis platziertes Unterverzeichnis;
- unter einer der genannten, als übergeordnete Spezialdatei bezeichnete Spezialdateien oder direkt unter der genannten, als übergeordnete Masterdatei bezeichnete Masterdatei platzierte elementare Datei (EF),
**dadurch gekennzeichnet, dass** die genannten Datenspeichermittel jeder Anwenderkarte wenigstens eine elementare Systemdatei umfassen, wobei jede mit einer entfernten zugelassenen und eine erste Lokalisierungsinformation der geheimen Referenz und des dieser entfernten zugelassenen Anwendung, mit der er verbunden ist, zugeordneten Meldungsauthentifizierungsmodus speichernde Anwendung verbundenen elementare Systemdatei,
und dass jede verbesserte Meldung eine zweite Lokalisierungsinformation ("DF Eingang") der elementaren Systemdatei umfasst, mit der die entfernte zugelassene Anwendung verbunden ist, zu der die in der genannten verbesserten Meldung enthaltenen Befehle gehören,
wobei die genannten Authentifizierungsmittel in jeder verbesserten unterschiedlichen Meldung die genannte zweite Lokalisierungsinformation der elementaren Systemdatei lesen, so dass in der elementaren Systemdatei die genannte erste Lokalisierungsinformation der geheimen Referenz und des zur Authentifizierung der genannten verbesserten unterschiedlichen Meldung zu nutzenden Meldungsauthentifizierungsmodus gelesen wird.

12. System gemäß Anspruch 11, **dadurch gekennzeichnet, dass** jede elementare Systemdatei unter einer Spezialdatei (DF) oder direkt unter der Masterdatei (MF) platziert wird, wobei maximal eine elementare Systemdatei unter jeder Spezialdatei platziert werden kann und maximal eine elementare Systemdatei direkt unter der Masterdatei platziert werden.

13. System gemäß Anspruch 12, **dadurch gekennzeichnet, dass**, wenn keine elementare Systemdatei unter einer Spezialdatei (DF) noch unter der Masterdatei (MF) existiert, dann jede unter der genannten Spezialdatei platzierte elementare Systemdatei (EF) unabhängig vom Wert der dieser elementaren Datei zugeordneten entfernten Zugangsbedingungen durch keinen entfernten Befehl zugänglich ist,
und dass, wenn keine elementare Systemdatei direkt unter der Masterdatei (MF) existiert, dann jede, direkt unter der Masterdatei platzierte elementare Systemdatei (EF) unabhängig von dem Wert der dieser elementaren Datei zugeordneten entfernten Zugangsbedingungen durch keinen entfernten Befehl zugänglich ist.

14. System gemäß Anspruch 11 bis 13, **dadurch gekennzeichnet, dass** die genannte zweite Lokalisationsinformation der elementaren Systemdatei ein Identifikator ("DF Eingang") einer Spezialdatei (DF) oder einer Masterdatei (MF) ist, auf die sich die genannte elementare Systemdatei gemäß einer vorbestimmten Suchstrategie in den Datenspeichermitteln bezieht.

15. System gemäß Anspruch 14, **dadurch gekennzeichnet, dass** die genannte vorbestimmte Suchstrategie in den Datenspeichermitteln ein oberer Suchmechanismus ist, bestehend aus der Suche danach, ob eine elementare Systemdatei unter der Spezialdatei (DF) oder der durch den genannten Indikator angezeigten Masterdatei (MF) existiert und im negativen Fall und wenn der Indikator die Masterdatei nicht anzeigt, in der Suche danach, ob eine elementare Systemdatei direkt unter der Masterdatei existiert.

16. System gemäß Anspruch 10 und Anspruch 11 bis 15, **dadurch gekennzeichnet, dass** im Falle einer Datei, von der eine der entfernten Zugangsbedingungen den Wert "privater Zugang" besitzt, die genannte einzige vorbestimmte entfernte Anwendung, deren entfernte Befehle auf die genannte Datei zugreifen können, unter dem Vorbehalt, dass ihre Authentifizierung gelingt, die zugelassene entfernte übergeordnete Anwendung der genannten Datei ist, das heißt, die zugelassene, entfernte, mit derselben elementaren Systemdatei verbundene Anwendung wie die Datei, af die sich die übergeordnete Spezialdatei (DF) oder die übergeordnete Masterdatei (MF) der genannten Datei bezieht,
und dass in dem Fall einer Datei, deren entfernte Zugangsbedingung den Wert "geteilter Zugang" besitzt, die genannten wenigstens zwei entfernten vorbestimmten Anwendungen, deren entfernte Befehle auf die genannte Datei zugreifen können, unter dem Vorbehalt, dass ihre Authentifizierung gelingt, alle zugelassenen entfernten Anwendungen sind; unabhängig von der elementaren Systemdatei, mit der jede von ihnen verbunden ist.

17. System gemäß Anspruch 11 bis 16, **dadurch gekennzeichnet, dass** jede elementare Systemdatei eine unterschiedliche Struktur von Zugangskontrollpolitikindikatoren umfasst, wobei jeder Zugangskontrollpolitikindikator für eine der genannten Anwendungen anzeigt, welche Zugangskontrollpolitik, nämlich die erste oder eine andere, mit dieser Anwendung genutzt wird,
wobei die genannte unterschiedliche Struktur von Zugangskontrollpolitikindikatoren allen Dateien (EF, DG, MF) zugeordnet ist, deren übergeordnete Spezialdatei (DF) oder übergeordnete Masterdatei (MF) sich auf die elementare Systemdatei bezieht.

18. Anwenderkarte mit Mikroprozessor von der zum Zusammenwirken mit einem Terminal (ME, 4) bestimmten Art, so dass eine Terminalausrüstung (MS; 1) eines Kommunikationssystems gemäß Anspruch 1 bis 17 gebildet wird, wobei die genannte Karte Datenspeichermittel (8) mit einer Vielzahl von Objekten (MF, DF, EF) umfasst, wobei die genannten Datenspeichermittel (8) als Träger für wenigstens zwei unterschiedliche Anwendungen dienen, wobei die genannte Anwenderkarte Ausführungsmittel (6, 7) von zu den genannten Anwendungen gehörenden Befehlen umfasst,
wobei jedes in den Datenspeichermitteln einer Anwenderkarte inbegriffene Objekt einer ersten, durch einen Satz erster Zugangsbedingungen definierten Zugangskontrollpolitik zugeordnet ist, wobei jede der genannten ersten Zugangsbedingungen für das genannte Objekt auf eine Gruppe von wenigstens einem zu der oder den die genannte erste Zugangskontrollpolitik nutzende Anwendung(en) gehörenden Befehl angewendet werden,
und **dadurch gekennzeichnet, dass** jedes Objekt der Datenspeichermittel der genannten Anwenderkarte ebenfalls wenigstens einer anderen entfernten Zugangskontrollpolitik (entfernte PCA Nr. 1, entfernte PCA Nr. 2) zugeordnet ist, wobei jede andere Zugangskontrollpolitik durch einen Satz von wenigstens einer alternativen Zugangsbedingung (cond. d'acc. à dist. 1, cond. d'acc. à dist. 2) definiert wird, wobei jede alternative Zugangsbedingung einer anderen vorgegebenen Zugangskontrollpolitik für das genannte Objekt auf eine Gruppe von wenigstens einem zu der oder den die genannte andere Datenzugangskontrollpolitik nutzende Anwendung(en) gehörenden Befehl angewendet wird,
und dass jedes Objekt ebenfalls einer Vielzahl von Zugangskontrollpolitikindikatoren zugeordnet ist, wobei jeder Zugangskontrollpolitikindikator für eine der genannten Anwendungen anzeigt, welche Zugangskontrollpolitik, nämlich die erste oder eine andere, mit dieser Anwendung genutzt wird, wobei die genannten Zugangskontrollpolitikindikatoren in den Datenspeichermitteln (8) der genannten Anwenderkarte gespeichert werden.

19. Gesichertes und unabhängiges Verwaltungsverfahren mit wenigstens zwei entfernten Anwendungen durch eine Anwenderkarte mit Mikroprozessor (5) von der zum Zusammenwirken mit einem Terminal (ME; 4) bestimmten Art, so dass eine Terminalausrüstung (MS; 1) eines Kommunikationssystems gemäß Anspruch 6 bis 17 gebildet wird,
**dadurch gekennzeichnet, dass** die genannte Anwenderkarte für jede empfangene verbesserte Meldung die folgende Stufe (551) ausführt: Überprüfung der Zugänglichkeit dieses entfernten Befehls für das betreffende Objekt für jeden, in der genannten verbesserten Meldung enthaltenen entfernten Befehl, wobei die genannte Überprüfung der Zugänglichkeit dieses entfernten Befehls für das betreffende Objekt sich auf eine erste oder entfernte, für das genannte betreffende Objekt mit der genannten laufenden entfernten Anwendung zu nutzende Zugangskontrollpolitik stützt.

20. Verfahren gemäß Anspruch 19, **dadurch gekennzeichnet, dass** die genannte Anwenderkarte für jede empfangene verbesserte Meldung ebenfalls eine vorherige Unterscheidungsstufe (54) der genannten verbesserten Meldung durchführt, so dass ihre Bearbeitung nur fortgeführt wird, wenn die entfernte, als so genannte laufende entfernte Anwendung bezeichnete Anwendung, zu der die entfernten Befehle gehören, die es enthält, eine zugelassene entfernte Anwendung ist.

21. Verfahren gemäß Anspruch 19 und 20, **dadurch gekennzeichnet, dass** die genannte Anwenderkarte für jede empfangene verbesserte Meldung ebenfalls eine vorherige Authentifizierungsstufe (57) der genannten verbesserten Meldung unter Verwendung einer geheimen Referenz und eines der genannten laufenden entfernten Anwendung zugeordneten Meldungsauthentifizierungsmodus durchführt.

22. Verfahren gemäß Anspruch 19 bis 21, **dadurch gekennzeichnet, dass** wenigstens bestimmte zur folgenden Gruppe gehörende Elemente mittels entfernter Befehle angelegt und / oder aktualisiert und / oder gelöscht werden können:
- die Werte der insbesondere der ersten oder entfernten Zugangsbedingungen der jedem Objekt zugeordneten Zugangskontrollpolitik;
- der mit jeder Anwendung für jedes Objekt zu verwendende insbesondere erste oder entfernte Zugangskontrollpolitikindikator;
- die Liste der zugelassenen entfernten Anwendungen;
- die zugeordnete geheime Referenz und der zugeordnete Meldungsauthentifizierungsmodus für jede der zugelassenen entfernten Anwendungen der genannten Liste;
- die mit jeweils jeder einer unterschiedlichen zugelassenen entfernten Anwendung verbundene(n) e-lementare(n) Systemdatei(en);
- Die elementaren Dateien (EF), Spezialdateien (DF) und Masterdateien (MF).

## Claims

1. A communication system of the type comprising at least one terminal (ME; 4) cooperating with a user card with microprocessor (5),
each user card including means (8) of storing data comprising a plurality of objects (MF, DF, EF), the said data storage means (8) serving as a medium for at least two distinct applications, the said user card comprising means (6, 7) of executing commands belonging to the said applications,
each object included in the data storage means of a user card being associated with a first access control policy defined by a set of first access conditions, each of the said first access conditions applying, for the said object, to a group of at least one command belonging to the application or applications using the said first access control policy,
**characterised in that** each object is also associated with at least one other access control policy, each other access control policy being defined by a set of at least one alternative access condition, each alternative access condition of another given access control policy applying, for the said object, to a group of at least one command belonging to the application or applications using the said other given access control policy,
and **in that** each object is also associated with a plurality of access control policy indicators, each access control policy indicator indicating, for one of the said applications, which access control policy, namely first or other, to use with this application, the said access control policy indicators being stored in the said data storage means (8).

2. A system according to Claim 1, **characterised in that**, for each object, at least one other access control policy is specific to one of the applications, each alternative access condition of this other specific access control policy applying, for the said object, to a group of at least one command belonging to the single application using this other specific access control policy.

3. A system according to either one of Claims 1 and 2, **characterised in that**, for each object, at least one other access control policy is entirely common to at least two applications, each alternative access condition of this other entirely common access control policy applying, for the said object, to a group of at least one command belonging to the said at least two applications using this other entirely common access control policy.

4. A system according to any one of Claims 1 to 3, **characterised in that**, for each object, at least one other access control policy is partially common to at least two applications,
certain of the alternative access conditions of this other partially common access control policy applying, for the said object, to a group of at least one command belonging to the said at least two applications using this other common access control policy,
other alternative access conditions of this other partially common access control policy applying, for the said object, to a group of at least one command belonging solely to one of the said at least two applications using this other common access control policy.

5. A system according to any one of Claims 1 to 4, of the type allowing cellular radio communication, **characterised in that** the terminal is a mobile station (MS; 1), the said user card being a subscriber identity module (5).

6. A system according to any one of Claims 1 to 5, of the type also comprising at least one message service centre (C-SMS),
the said data storage means of the user card serving as a medium for at least one local application and at least one remote application of the said user card, the commands being said to be local when they belong to the said local application or remote when they belong to the said remote application,
each terminal (4) being able to receive messages, of the normal or enhanced type, sent by the said message service centre, each user card (5) comprising means (9) of storing and processing the messages received by the terminal with which it cooperates,
the normal messages containing raw data constituting information intended to be supplied to the subscriber via in particular a display screen of the terminal, the enhanced messages (20) containing remote commands (cmd 1, cmd 2, ...),
**characterised in that** the said data storage means (8) of each user card also store a list of authorised remote applications (TP-OA 1 to TP-OA n),
and **in that** each user card also comprises means of discriminating the enhanced messages, making it possible to block each enhanced message which contains remote commands not belonging to one of the said authorised remote applications.

7. A system according to Claim 6, **characterised in that** the said data storage means of each user card also store, for each of the said authorised remote applications, an associated secret reference (Kappli) and message authentication mode (algo_id),
and **in that** each user card also comprises means of authenticating the discriminated enhanced messages, making it possible to authenticate a discriminated enhanced message using the secret reference and the message authentication mode associated, in the said data storage means, with the authorised remote application to which the commands contained in the said discriminated enhanced message belong.

8. A system according to any one of Claims 1 to 7, **characterised in that**, for each object, the or at least one of the other access control policies, referred to as the second access control policy, is defined by a set of at least one particular alternative access condition, each particular alternative access condition being able to take in particular the following values:
- "no access" ("NEVER"): if the said object is not accessible through any command of the said group of at least one command to which the said particular alternative access condition applies;
- "private access" ("PRIVATE"): if the said object is accessible only through the commands belonging to a single predetermined application, from amongst the said group of at least one command to which the said particular alternative access condition applies;
- "shared access" ("SHARED"): if the said object is accessible through the commands belonging to at least two predetermined applications, from amongst the said group of at least one command to which the said particular alternative access condition applies.

9. A system according to any one of Claims 6 to 8, **characterised in that**, for each object, at least one other access control policy, referred to as the remote access control policy, is defined by a set of at least one remote access condition (rem. acc. cond. 1, rem. acc. cond. 2), each remote access condition applying, for the said object, to a group of at least one remote command belonging to the remote application or applications using the said remote access control policy,
and **in that**, for each object, only the access control policy indicators each associated with one of the remote applications can indicate the said remote access control policy.

10. A system according to Claims 8 and 9, **characterised in that**, for each object, each remote access condition can take the same values ("NEVER", "PRIVATE", "SHARED") as the said particular alternative access conditions.

11. A system according to any one of Claims 7 to 10, the said data storage means of each user card possessing a hierarchical structure with at least three levels and comprising at least the following three types of file:
- master file (MF), or main directory;
- dedicated file (DF), or secondary directory placed under the said master file;
- elementary file (EF), placed under one of the said dedicated files, referred to as the parent dedicated file, or directly under the said master file, referred to as the parent master file,
**characterised in that** the said data storage means of each user card comprise at least one system elementary file, each system elementary file being linked to an authorised remote application and storing a first item of location information for the secret reference and for the message authentication mode associated with this authorised remote application with which it is linked,
and **in that** each enhanced message comprises a second item of location information ("DF input") for the system elementary file with which there is linked the authorised remote application to which the commands contained in the said enhanced message belong,
the said authentication means reading in each discriminated enhanced message the said second item of location information for the system elementary file, so as to read in the system elementary file the said first item of location information for the secret reference and for the message authentication mode to be used for authenticating the said discriminated enhanced message.

12. A system according to Claim 11, **characterised in that** each system elementary file is placed under a dedicated file (DF) or directly under the master file (MF), one system elementary file at a maximum being able to be placed under each dedicated file, and one system elementary file at a maximum being able to be placed directly under the master file.

13. A system according to Claim 12, **characterised in that**, if no system elementary file exists under a dedicated file (DF), nor under the master file (MF), then each elementary file (EF) placed under the said dedicated file, whatever the value of the remote access conditions associated with this elementary file, is not accessible through any remote command;
and **in that**, if no system elementary file exists directly under the master file (MF), then each elementary file (EF) placed directly under the master file, whatever the value of the remote access conditions associated with this elementary file, is not accessible through any remote command.

14. A system according to any one of Claims 11 to 13, **characterised in that** the second item of location information for the system elementary file is an identifier ("DF input") of a dedicated file (DF) or of a master file (MF) to which the said system elementary file relates according to a predetermined search strategy in the data storage means.

15. A system according to Claim 14, **characterised in that** the said predetermined search strategy in the data storage means is an upstream search mechanism consisting of seeking whether a system elementary file exists under the dedicated file (DF) or the master file (MF) indicated by the said identifier and, in the negative and if the identifier does not indicate the master file, seeking whether a system elementary file exists directly under the master file.

16. A system according to Claim 10 and any one of Claims 11 to 15, **characterised in that**, in the case of a file where one of the remote access conditions has the value "access private", the said single predetermined remote application whose remote commands can access the said file is, subject to its authentication being successful, the parent authorised remote application of the said file, that is to say the authorised remote application linked to the same system elementary file as that to which the parent dedicated file (DF) or the parent master file (MF) of the said file relates,
and **in that**, in the case of a file whose remote access condition has the value "access shared", the said at least two predetermined remote applications whose remote commands can access the said file are, subject to their authentication being successful, all the authorised remote applications, whatever the system elementary file to which each of them is linked.

17. A system according to any one of Claims 11 to 16, **characterised in that** each system elementary file comprises a distinct set of access control policy indicators, each access control policy indicator indicating, for one of the said applications, which access control policy, namely first or other, to use with this application,
the said distinct set of access control policy indicators being associated with all the files (EF, DF, MF) where the parent dedicated file (DF) or parent master file (MF) relates to the said system elementary file.

18. A user card with microprocessor of the type intended to cooperate with a terminal (ME; 4) so as to constitute terminal equipment (MS; 1) of a communication system according to any one of Claims 1 to 17, the said card including data storage means (8) comprising a plurality of objects (MF, DF, EF), the said data storage means (8) serving as a medium for at least two distinct applications, the said user card comprising means (6, 7) of executing commands belonging to the said applications,
each object included in the data storage means of a user card being associated with a first access control policy defined by a set of first access conditions, each of the said first access conditions applying, for the said object, to a group of at least one command belonging to the application or applications using the said first access control policy,
and **characterised in that** each object of the data storage means of the said user card is also associated with at least one other access control policy (remote PCA N° 1, remote PCA N° 2), each other access control policy being defined by a set of at least one alternative access condition (rem. acc. cond. 1, rem. acc. cond. 2), each alternative access condition of another given access control policy applying, for the said object, to a group of at least one command belonging to the application or applications using the said other given access control policy,
and **in that** each object is also associated with a plurality of access control policy indicators, each access control policy indicator indicating, for one of the said applications, which access control policy, namely first or other, to use with this application, the said access control policy indicators being stored in the data storage means (8) of the said user card.

19. A method for the secure and independent management of at least two remote applications, by a user card with microprocessor (5) of the type intended to cooperate with a terminal (ME; 4) so as to constitute terminal equipment (MS; 1) of a communication system according to any one of Claims 6 to 17,
**characterised in that**, for each enhanced message received, the said user card performs the following step (511): for each remote command contained in the said enhanced message, verifying the accessibility of this remote command to the object concerned, the said verification of accessibility being based on an access control policy, first or remote, to be used for the said object concerned with the said current distant application.

20. A method according to Claim 19, **characterised in that**, for each enhanced message received, the said user card also performs a prior step (54) of discrimination of the said enhanced message, so as to pursue its processing only if the remote application, referred to as the current remote application, to which the remote commands which it contains belong is an authorised remote application.

21. A method according to either one of Claims 19 and 20, **characterised in that**, for each enhanced message received, the said user card also performs a prior step (57) of authenticating the said enhanced message, using a secret reference and a message authentication mode associated with the said current remote application.

22. A method according to any one of Claims 19 to 21, **characterised in that** at least some of the elements belonging to the following group can be created and/or updated and/or eliminated by means of remote commands:
- the values of the access conditions, in particular first or remote, of the access control policies associated with each object;
- the access control policy indicator, in particular first or remote, to be used with each application for each object;
- the list of authorised remote applications;
- for each of the authorised remote applications in the said list, the associated secret reference and message authentication mode;
- the system elementary file or files each linked to a distinct authorised remote application;
- the elementary files (EF), dedicated (DF) and master (MF).
